# EUROPEAN PATENT APPLICATION

(11) **EP 4 389 640 A1**
(43) Date of publication of application: **26.06.2024**
(21) Application number: 22214909.8
(22) Date of filing: 20.12.2022
(51) Int. Cl.: B65G 1/04

(54) **STORAGE DEVICE WITH DOWNWARD FACING LOAD AND UNLOAD OPENING AND METHOD OF LOADING AND UNLOADING STORAGE CONTAINERS FROM BELOW**

(71) Applicant: RoboSystems Consulting GmbH, 12355 Berlin (DE)
(72) Inventor: KRÄMER, Karl-Hermann, 89547 Gerstetten (DE)

(57) **Abstract**

The invention relates to storing goods in a space saving manner. To be able to store goods in storage containers (4, 4A) in a space saving manner, the invention provides a storage device (1) with at least one combined load and unload opening (2), wherein the at least one combined load and unload opening (2) faces downwards, and wherein storage containers (4, 4A) are moved into a storage position within the storage device (1) and unloaded from the storage position from below via the combined load and unload opening (2).

## Description

### Field of the Invention

The invention generally relates to storage devices having at least one combined load and unload opening, and methods of loading and unloading storage containers into and from a storage device.

### Technological Background

Storage devices are used to store goods in a space saving and easily retrievable manner. Yet, known storage device require large rooms or halls, in particular when they are combined with automated loading and unloading devices.

### Description of the Invention

In view of the above-mentioned disadvantages, an object of the invention may be to provide a storage device and a storage method that uses storage space in a more efficient manner.

This object is achieved according to one aspect of the invention concerning the above-mentioned storage device in that the at least one combined load and unload opening faces downwards. For another aspect of the invention pertaining to the above-mentioned method of loading and unloading storage containers into and from a storage device, the object is achieved in that the storage device is a storage device according to the invention, wherein storage containers are moved into a storage position within the storage device and unloaded from the storage position from below via the combined load and unload opening.

Due to the downwards orientation, the storage device can extend wall-to-wall and, hence, use space more efficiently.

The solution according to the invention can be further improved by the embodiments mentioned in the following, which, unless explicitly mentioned to the contrary, can be combined as desired. The embodiments and their possible advantages are elaborated below:
According to an embodiment, the storage device comprises at least one storage column for storing storage containers one above the other, wherein the at least one storage column has the combined load and unload opening at its lower end.

An advantage of this embodiment may be that the storage column can be loaded and unloaded more efficiently than storage columns of storages devices with load and/or unload openings at lateral sides thereof.

According to an embodiment, the storage device comprises a plurality of storage columns for storing storage containers one above the other, and a distribution level below the storage columns, wherein at least two of the plurality of storage columns open into the distribution level via the combined load and unload openings of the at least two of the storage columns.

An advantage of this embodiment may be that the plurality of storage columns can be loaded and unloaded more efficiently than storage columns of storages devices with load and/or unload openings at lateral sides thereof.

According to an embodiment, the storage device comprises at least one feed opening for feeding storage containers to the distribution level.

An advantage of this embodiment may be that goods to be loaded or unloaded can be fed to or removed from the at least one storage column via the distribution level and the at least one feed opening easily.

According to an embodiment, the at least one feed opening opens horizontally and/or in that the at least one feed opening is level with the distribution level. In particular, the distribution level may be the lowest level of the storage device.

An advantage of this embodiment may be that goods need not to be lifted for loading and/or unloading.

According to an embodiment, the storage columns are arranged next to each other along a first and a second horizontal direction, the first horizontal direction differing from the second horizontal direction.

An advantage of this embodiment may be that goods can be moved to a predetermined of the storage columns in two directions, which, in addition to more efficiently using space due to the arrangement of the storage columns, reduces time for reaching the predetermined storage column or for removing goods from the predetermined storage column.

According to an embodiment, the storage device comprises at least one removal opening for presenting storage containers for removal of goods from the storage containers by an operator, the at least one removal opening facing upwards.

An advantage of this embodiment may be that the operator can easily access the goods when the goods are presented to the operator via the upwards facing removal opening.

According to an embodiment, the storage device comprises at least one removal column with one of the at least one removal openings forming the upper end of the at least one removal column, wherein a lower end of the at least one removal column borders on the distribution level.

An advantage of this embodiment may be that goods can efficiently transported from the at least one storage column and via the distribution level and the removal column to the removal opening for presenting the goods to the operator, the moving path of the goods avoiding unnecessary lifting of the goods.

According to an embodiment, the storage device comprises different predefined temperature zones for storing goods with different storage temperature requirements, the predefined temperature zone for the goods having the lowest required storage temperature being further away from at least one of the lateral sides of the storage device than at least one predefined storage zone for goods having higher required storage temperatures. The predefined temperature zones may be defined by a control device of the storage device, the control device determining where to store goods with specific predefined temperature requirements.

An advantage of this embodiment may be that goods that need to remain cool during storage can be stored close to each other, reducing the energy requirements for cooling these goods.

According to an embodiment, the storage device comprises at least one support device for selectively vertically supporting at least one storage container.

An advantage of this embodiment may be that storage containers can be held in or released from the respective storage column, for example to the distribution level, in a selective manner.

According to an embodiment of the method, the storage containers are stored in the at least one storage column arranged one above the other.

An advantage of this embodiment may be that less storing space is required, as the storage containers can be stacked onto each other and shelfs for placing the containers on can be avoided.

According to an embodiment, the storage containers are distributed or moved to a preselected storage column of the plurality of storage columns via the distribution level.

An advantage of this embodiment may be that the storage column can be packed in a compact manner, as various distribution paths crossing different levels of the storage device can be avoided.

According to an embodiment, the e storage containers are horizontally input into the distribution level via the feed opening.

An advantage of this embodiment may be that unnecessary vertical movements of the goods prior to loading or after unloading can be avoided.

According to an embodiment, goods arranged in the storage containers are moved with the respective container from its storage position in the respective storage column to the at least one removal opening via the distribution level.

An advantage of this embodiment may be that the goods need not to be handled separately, but in a predefined storage container, which facilitates automated handling and storing.

According to an embodiment, goods with lower storage temperature requirements are stored further away from at least one lateral side of the storage device than goods with higher storage temperature requirements.

An advantage of this embodiment may be that goods that need to remain cool during storage can be stored close to each other, reducing the energy requirements for cooling these goods.

According to another aspect of the invention, which may be advantageous independent from the previous mentioned aspects and embodiments, the invention provides a support device for selectively vertically supporting at least one storage container in a storage device. The support device comprises a base body adapted to be fixed to a load-bearing structure element of the storage device, and a support arm. The support arm is connected to the base body to be pivotable around a pivot axis and has a supporting position and a passing position. The support arm in its support position is pivoted further away from the base body than in its passing position. The support device further comprises a holding mechanism that is adapted to selectively hold the support arm in the passing position.

An advantage of this aspect may be that a storage container that rests on the support arm when stored does not collide with the support arm which is held in the passing position when the storage container passes the support device during loading or unloading.

According to an embodiment of the support device, the holding mechanism comprises an actuator element that protrudes from the support arm in its passing position away from the base body and preferably perpendicular to the pivot axis.

An advantage of this embodiment may be that the support device can be mechanically actuated by storage containers as such, such that no wiring or electric actuators are required for moving and/or holding the support arm.

According to an embodiment of the support device, the actuator element is connected to the support arm to be pivotable relative to the support arm and around another pivot axis and.

An advantage of this embodiment may be that forces that are actuated by the actuator element onto the support arm for holding the support arm in its passing position can be tuned during the design phase of the support device.

According to an embodiment of the support device, the support device is adapted such that the actuator element automatically returns from a deflected position to a rest position, when in the actuator element in its deflected position is pivoted out of its rest position by an external force.

An advantage of this embodiment may be that the actuator element has a predefined position, namely the rest position, in which the actuator element is arranged for interaction with a storage container unless the storage container already interacts with the actuator element, which facilitates availability of the actuator element for storage containers and avoids that a storage is invertedly blocked or not blocked from moving by the support device.

According to an embodiment of the support device, a center of the other pivot axis is arranged between an actuating end of the actuator element, the actuating end protruding from the support arm in its passing position, and a center of mass of the actuator element.

An advantage of this embodiment may be that the actuator element is automatically moved to its rest position by gravity, which reduces the need of elements like springs and, thus, risks of malfunction of such elements.

According to an embodiment of the support device, the support arm comprises a curved guide slot in which the other pivot axis of the actuator element is guided.

An advantage of this embodiment may be that a mechanical connection between the support arm and the actuator element can be provided, which may guide the relative movement between the support arm and the actuator element.

According to an embodiment of the support device, the curved guide slot comprises a holding end, a release end and an inner surface that connects the holding end and the release end. The inner surfaces faces away from the pivot axis of the support arm. A curvature of the inner surface at the holding end has a radius with its center arranged outside of the pivot axis of the support arm.

An advantage of this aspect may be that the inner surface can block the support arm from inadvertent movements out of the passing position which reduces the need of elements like latch elements that would hold the support arm in its passing position and, thus, risks of malfunction of such elements. This embodiment may be designated as toggle lever system.

According to an embodiment of the support device, the support device and preferably the holding mechanism comprises an entrained element. The actuator element is adapted to act as an entrainer for the entrained element, wherein the entrained element is connected to the actuator element via the other pivot axis and to the base body via yet another pivot axis.

An advantage of this embodiment may be that the entrained element can provide a movable stop for the entrainer, i.e. the actuator element, that allows that the actuator element can be moved out of the holding position by blocking the pivot movement around the other axis.

According to an embodiment of the support device, the center of the radius of the curvature of the inner surface at the holding end of the guide slot corresponds to a central axis of the other pivot axis and/or is further away from the pivot axis of the support arm than the other pivot axis.

An advantage of this aspect may be that the inner surface can block the support arm from inadvertent movements out of the passing position which reduces the need of elements like latch elements that would hold the support arm in its passing position and, thus, risks of malfunction of such elements. This embodiment may be designated as toggle lever system.

According to an embodiment of the support device, the curved guide slot extends around the pivot axis of the support arm from the holding end and the release end.

An advantage of this embodiment may be that the guide slot enables and guides predefined relative movements of the support arm, which reduces space requirements of the support device.

According to another aspect of the invention, which may be advantageous independent from the previous mentioned aspects and embodiments, a storage container mover for moving a storage container horizontally is provided. The storage container mover comprises a first chassis with a first predetermined driving direction, a second chassis with a second predetermined driving direction that differs from the first predetermined divining direction, and a lifting device that is adapted to lift one of the first and second chassis relative to the other one of the first and second chassis.

An advantage of this aspect may be that the storage container mover can change moving direction from the first predetermined driving direction to the second predetermined driving direction or from the second predetermined driving direction to the first predetermined driving direction simply by lifting one of the first and second chassis' and requires no complicated and probably impractical steering suspension with swivelable wheels.

According to an embodiment of the storage container mover, the first chassis comprises a lateral sidewall that extends parallel to the first predetermined driving direction, and the second chassis comprises a frontal sidewall that extends perpendicular to the second predetermined driving direction, where in the lateral sidewall and the frontal sidewall each comprise a lifting slot through which a lifting bolt of the lifting device extends.

An advantage of this embodiment may be that the first and second chassis' can be lifted with respect to each other easily.

According to an embodiment of the storage container mover, the lifting slot of the lateral side wall comprises two end sections curved in opposite directions with a transition section there between. The lifting slot of the frontal sidewall comprises two end sections curved in opposite directions with a transition section there between. When the transition sections overlap each other in the second predetermined driving direction, the lifting slots are formed mirror symmetrical. Overlapping may mean that a projection of one of the lifting slots in the second predetermined driving direction intersects with the other one of the lifting slots.

An advantage of this embodiment may be that a lifting element that may extend through both of the lifting slots merely needs to be moved in the first predetermined driving direction while maintaining in the lifting slots to lift one of the chassis' with respect to the other one.

According to an embodiment of the storage container mover, only one of the first chassis and the second chassis comprises a load receiving element for receiving a weight load from a storage container moved by the storage container mover, and for diverting the weight load into the ground via wheels of the one of the first chassis and the second chassis.

### Brief Description of the Drawings

The invention is described hereinafter in more detail and in an exemplary manner using advantageous embodiments and with reference to the drawings. The described embodiments are only possible configurations in which, however, the individual features as describes above can be provided independent of one another or can be omitted in the drawings:
For elements of an exemplary embodiment, which correspond in form and/or function to elements of another exemplary embodiment, the same reference numerals are used.
- Figure 1: shows an exemplary embodiment of a storage device according to the invention,
- Figure 2: shows an exemplary embodiment of a feed device of the storage device according to the invention,
- Figure 3: shows the storage device of the exemplary embodiment of figure 1 and the feed device of the exemplary embodiment of figure 2,
- Figure 4: shows a detail of the storage device of the exemplary embodiment of figure 1,
- Figure 5: shows a different detail of the detailed view of figure 4,
- Figure 6: shows an exemplary embodiment of a support device according to the invention,
- Figure 7: shows the exemplary embodiment of figure 6 in a partly excised view,
- Figure 8: shows the exemplary embodiment of figure 6 in a partly transparent view,
- Figure 9: shows the exemplary embodiment of figure 6 in a partly excised and transparent view,
- Figure 10: shows the exemplary embodiment of figure 8 in a different state,
- Figure 11: shows the exemplary embodiment of figure 10 in a partly excised view,
- Figure 12: shows the exemplary embodiment of figure 8 in another state,
- Figure 13: shows the exemplary embodiment of figure 11 in a partly excised view,
- Figure 14: shows a detail of the exemplary embodiment of figure 6,
- Figure 15: shows another detail of the exemplary embodiment of figure 6,
- Figure 16: shows yet another detail of the exemplary embodiment of figure 6,
- Figures 17 to 24: show the loading a storage container into the support device of the previous figures in various states,
- Figures 25 to 33: show the unloading a storage container into the support device of the previous figures in various states,
- Figure 34: shows an exemplary embodiment of a storage container mover,
- Figure 35: shows a first chassis of the exemplary embodiment of a storage container mover of figure 37,
- Figure 36: shows a second chassis of the exemplary embodiment of a storage container mover of figure 37,
- Figure 37: shows a lifting device of the exemplary embodiment of a storage container mover of figure 37,
- Figures 38 to 40: show the storage container mover of the exemplary embodiment of figure 36 in different states
- Figure 41 to 43: show a detail of the storage container mover of the exemplary embodiment of figure 36 in the different states of figures 40 to 42.

### Description of Exemplary Embodiments

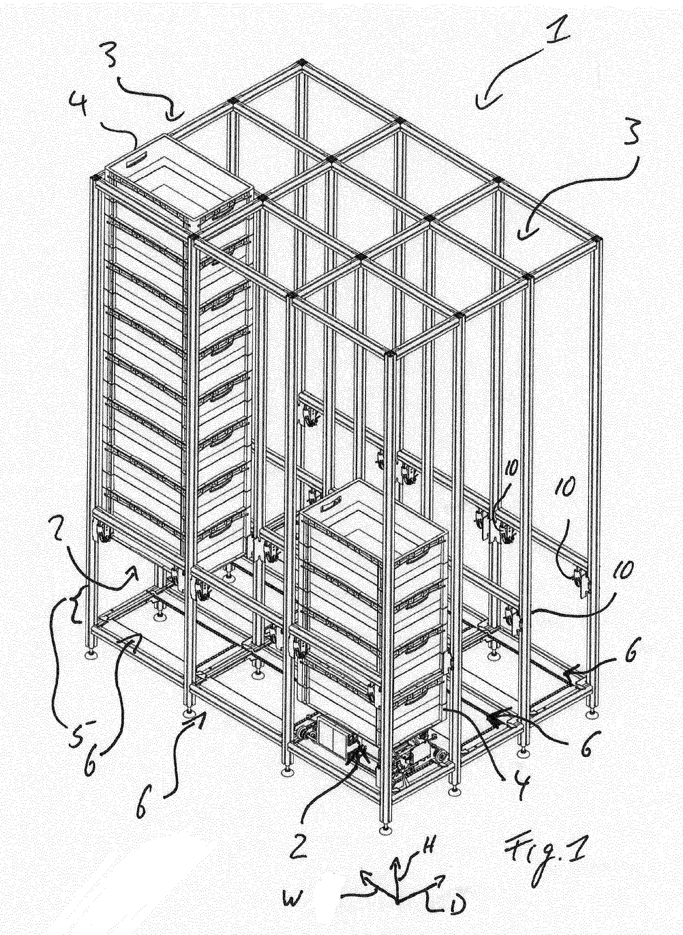

Figure 1 shows a first exemplary embodiment of a storage device 1 according to the invention and in a schematic perspective view. The storage device 1 comprises at least one combined load and unload opening 2 that faces downwards. Downwards may mean that the combined load and unload opening 2 faces in the direction of gravity and/or a floor the storage device 1 is standing on.

The storage device 1 may comprise at least one storage column 3 for storing storage containers 4 one above the other. The at least one storage column 3 may have the combined load and unload opening 2 at its lower end. The lower end of the storage column 3 may be an end of the storage column 3 that faces in the direction of gravity and/or a floor the storage device 1 is standing on. The storage containers 4 may be stored in the at least one storage column 3 arranged one above the other. Hence, the storage containers 4 may be stacked one above the other when placed in their storage position in the storage column 3

The storage device 1 may comprise a plurality of storage columns 3 for storing storage containers 4 one above the other. Selected or even each of the storage columns 3 may comprise one combined load and unload opening 2 at its lower end. Further, the storage device 1 may comprise a distribution level 5 below the storage columns 3. At least two of the plurality of storage columns 3 may open into the distribution level 5 via the respective combined load and unload openings 2 of the plurality of the storage columns 3. The distribution level 5 may be provided for moving storage containers 4 to or removing storage containers 4 from the combined load and unload openings 2. Thus, the storage containers 4 may be distributed to a preselected storage column 3 of the plurality of storage columns 3 via the distribution level 5.

The storage device 1 may comprise at least one feed opening 6 or a plurality of feed openings 6 for feeding storage containers 4 to the distribution level 5. The at least one feed opening 6 or selected or all of the plurality of feed openings 6 may be provided on a selected or on multiple lateral sides of the storage device 1. Thus, the storage containers 4 may be horizontally input into the distribution level 5 via the at least one feed opening 6 or via different of the feed openings 6.

The at least one feed opening 6 or selected or all of the plurality of feed openings 6 may open horizontally. Alternatively or additionally, the at least one feed opening 6 or selected or all of the plurality of feed openings 6 may be level with the distribution level.

The storage columns 3 may be arranged next to each other along a first and a second horizontal direction D, W, the first horizontal direction W differing from the second horizontal direction D. For example, the first horizontal direction W may be a direction along the width of the storage device 1. The second horizontal direction D may be a direction along the depth of the storage device 1. The horizontal direction D, W may extend perpendicular to each other and/or to a vertical direction H. The vertical direction H may be a direction along the height of the storage device 1.

The storage device 1 may comprise different predefined temperature zones for storing goods with different storage temperature requirements. The predefined temperature zone for the goods having the lowest required storage temperature may be provided further away from at least one of the lateral sides of the storage device 1 than at least one predefined storage zone for goods having higher required storage temperatures. In the exemplary embodiment of figure 1, the predefined temperature zone for the goods having the lowest required storage temperature, e.g. frozen goods or goods that need to be stored at low temperatures, may be placed in the middle storage column 3. The storage zone for goods having higher required storage temperatures, e.g. goods that may be stored at room temperature or that have no predefined storage temperature requirements, may surround the predefined temperature zone for the goods having the lowest required storage temperature. Thus, goods with lower storage temperature requirements may be stored further away from at least one lateral side of the storage device 1 than goods with higher storage temperature requirements. The predefined temperature zones may be defined by a control device of the storage device 1, the control device selecting storage positions for goods with different predefined temperature requirements.

The storage device 1 may comprise at least one support device 10 for selectively vertically supporting at least one storage container 4. For example, the at least one support device 10 may be provided to selectively protrude into one storage column 3. The at least one support device 10 may be arranged in a corner of one of the storage columns 3. Selected or all of the storage columns 3 may comprise more than one support device 10, wherein each of the support devices 10 is arranged in a different corner of the storage column 3. The at least one support device 10 or selected or all of the support devices 10 may each selectively protrude into two neighboring storage columns 3. Selected or all of the support devices 10 may be arranged in a mutual plane that extends parallel to at least one or even both of the horizontal directions D, W and perpendicular to the vertical direction H. At least one storage container 4 may rest on the at least one support device 10 or on a plurality of support devices 10 when the storage container 4 is arranged in its storage position. A plurality of storage containers 4 may be stacked onto each other and rest unto on the at least one support device 10 when the storage containers 4 is arranged in their storage position in one of the storage columns 3.

When storage containers 4 are loaded to or unloaded from the storage device 1, the storage containers 4 are moved into their storage position within the storage device 1 and unloaded from the storage position from below via the combined load and unload opening 2 of the storage device 1.

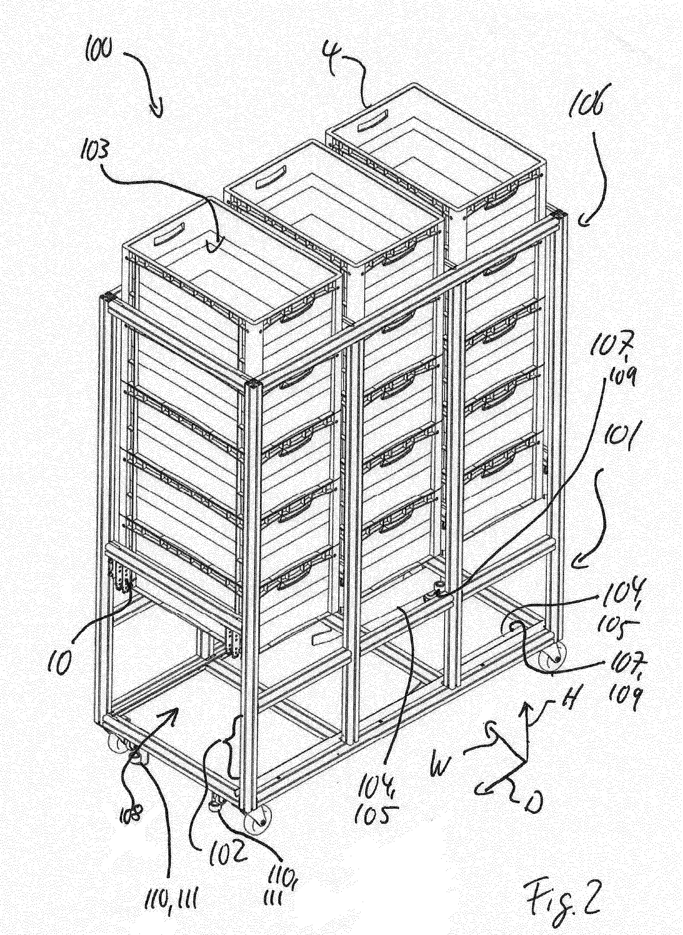

Figure 2 shows another exemplary embodiment of a feed device in a schematic perspective view.

The feed device 100 may comprise a counter feed opening 101 for feeding storage containers 4 to the storage device. The counter feed opening 101 may open horizontally and may form an open end of a feed level 102. The feed level 102 may have a distance to a ground the storage device 1 and the feed device 100 stand on, that is at least similar or even identical to the distance of the distribution level 5 to the ground. The counter feed opening 101 may form an open end of the feed level 102 against the horizontal direction D.

Above the feed level 102, i.e. behind the feed level 102 in the vertical direction H, the feed device 100 may comprise at least one storage column 103 for storing at least one storage container 4 or a plurality of storage containers 4. The at least one storage column 103 may open towards the feed level 102, i.e. against the vertical direction H.

The feed device 100 may comprise a plurality of storage columns 103. Selected or all of the storage columns 103 may be arranged one after the other along the horizontal direction D at least when the feed device 100 is coupled to the storage device 1. The feed level 102 may extend along the horizontal direction D such that selected or all of the storage columns 103 open into the feed level 102. The feed level 102 may also be designated as feed duct.

The feed device 100 may comprise at least one support device 10 or a plurality of support devices 10. With respect to the storage columns 103 of the feed device 100, the support device 10 may be provided as explained above with respect to the storage columns 3 of the storage device 1. A repetition of the respective features is omitted, for the sake of brevity.

The feed device 100 may comprise a position defining device 104 for defining a feed position of the feed device 100 with respect to the storage device 1. In the feed position, the counter feed opening 101 may be aligned with the feed opening 6.

The position defining device 104 may be arranged at an end of the feed device 100 that faces the horizontal direction D. The position defining device 104 may be arranged under the feed level 102, i.e. before the feed level 102 in the vertical direction H. The position defining device 104 may at least partly protrude a front side 106 of the feed device 100 that faces the horizontal direction D. The front side 106 may extend along the horizontal direction W and the vertical direction H and may comprise the counter feed opening 101. For example, the position definition device 104 may comprise at least one guide plate 105 or even more and for example two guide plates 105, which may protrude from the front side 106.

The feed device 100 may comprise a position securing device 107 for securing the feed position of the feed device 100 with respect to the storage device 1. The position securing device 107 may be positioned behind the front side 106 in the horizontal direction D. Hence, the position securing device 107 may be arranged at a distance from the counter feed opening 101 and/or between the front side 106 and a rear side 108 of the feed device 100, the rear side 108 being arranged opposite of the front side 106. For example, the position securing device 107 may be arranged between the guide plated 105. For example, the position securing device 107 may comprise a securing opening that extends along the vertical direction H and is adapted to receive a securing pin. The position securing device 107 may comprise two securing elements 109, only one of which being visible in the perspective view of figure 2. Each of the securing elements 109 may comprise one securing opening. The securing elements 109 may be arranged at a distance to each other parallel to the front side 106 and/or along the horizontal direction W. The securing elements 109 may have identical distances from the front side 106.

The feed device 100 may comprise a coupling device 110 for coupling the feed device 100 to another feed device 100.

The coupling device 110 may be positioned behind the rear side 108 in the horizontal direction D. Hence, the coupling device 110 may protrude from the rear side 108 away from the counter feed opening 101. For example, the coupling device 110 may comprise a securing opening that extends along the vertical direction H and is adapted to receive a securing pin. The coupling device 110 may comprise two coupling elements 111. Each of the coupling elements 111 may comprise one securing opening. The coupling elements 111 may be arranged at a distance to each other parallel to the rear side 108 and/or along the horizontal direction W. The coupling elements 111 may have identical distances from the rear side 108. The coupling elements 111 may be provided such that their coupling openings are aligned with respective securing openings of securing elements 109 of another feed device 100 when the front side 106 of the other feed device 100 is arranged in the vicinity of the or contacts the rear side 108 of the depicted feed device 100.

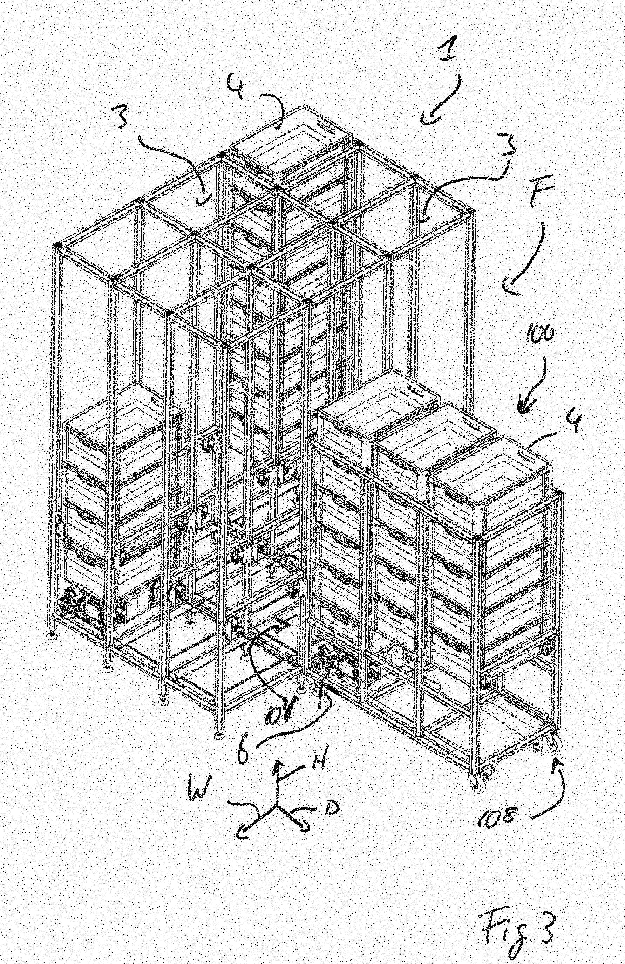

Figure 3 shows the storage device 1 of the exemplary embodiment of figure 1 and the feed device 100 of the exemplary embodiment of figure 2, wherein the feed device 100 is arranged in its feed position F with respect to the storage device 1. The distribution level 5 and the feed level 102 are aligned, such that storage containers 4 can be fed from the feed device 100 to the storage device 1 via the counter feed opening 101 and the feed opening 6. In particular, the feed opening 6 and the counter feed opening 101 may contact each other in the feed position F.

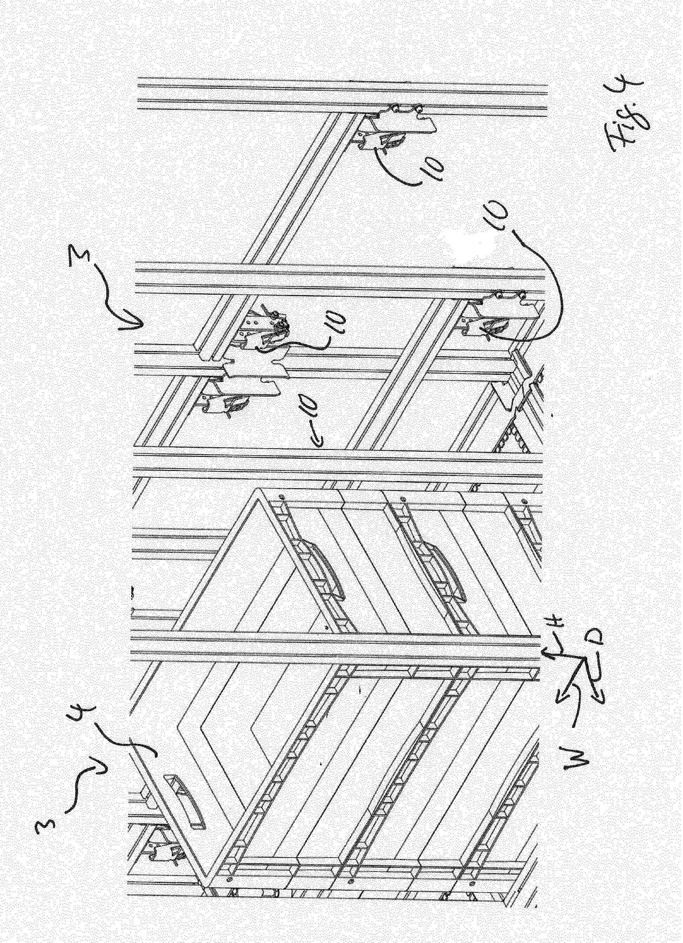

Figure 4 shows an enlarged view of the storage device 1 of the exemplary embodiment of figure 1. From the enlarged view, it is apparent that at least one of the storage columns 3 may comprise four support devices 10, two of which being arranged at one side storage columns 3 and the other two being arranged on another side opposite to the one side, preferably symmetrically.

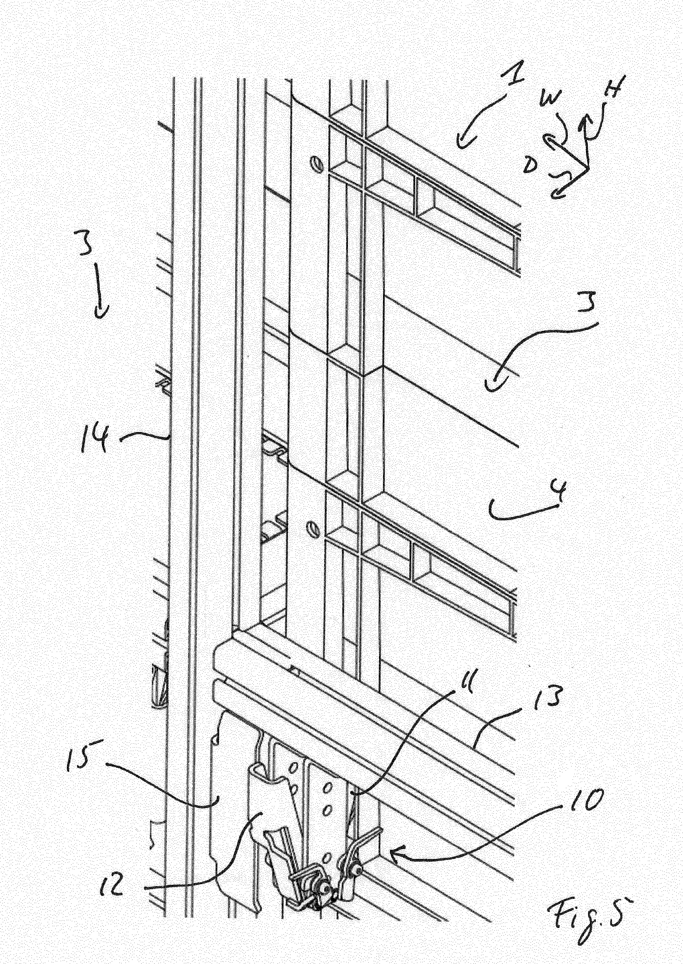

Figure 5 shows an enlarged view of the storage device 1 of the exemplary embodiment of figure 1. From the enlarged view, it is apparent that the support device 1 may comprise at least one support arm 11 or even two support arms 11, 12. The at least one support arm 3 may selectively protrude into the adjacent storage column 3 or into one of the adjacent storage columns 3. Each of the support arm 3 may selectively protrude into a respective one of the adjacent storage columns 3.

The storage device 1 may comprise a base frame with horizontal bars 13 and vertical bars 14 forming a framework. The horizontal bars 13 may each interconnect two of the vertical bars 14 or vice versa. The support device 10 may be affixed to one of the horizontal bars 13 or of the vertical bars 14. The storage columns 3 may be defined by the vertical bars 14 and/or the horizontal bars 13. As shown in the exemplary embodiment of figure 5, the support device 10 may be affixed to one of the horizontal bars 13 and particularly to the underside of the horizontal bar 13. Selected or all of the support devices 10 may be affixed to a respective one of the horizontal bars 13 and particularly to the undersides thereof.

The storage device 1 may comprise a positioning plate 15 for positioning storage containers 4 perpendicular to the vertical direction H while moving through the respective storage column 3 along the vertical direction H. The storage device 1 may comprise a plurality of positioning plates 15

From the enlarged view, it is apparent that at least one of the storage columns 3 may comprise four positioning plates 15, two of which being arranged at one side of the storage columns 3 and the other two being arranged on another side opposite to the one side, preferably symmetrically. The at least one positioning plate 15 or at least selected or even all of the positioning plates 15 may be arranged between a respective one of the support devices 10 and a respective one of the horizontal bars 13. The at least one positioning plate 15 or at least selected or even all of the positioning plates 15 may be attached to a respective one of the horizontal bars 13.

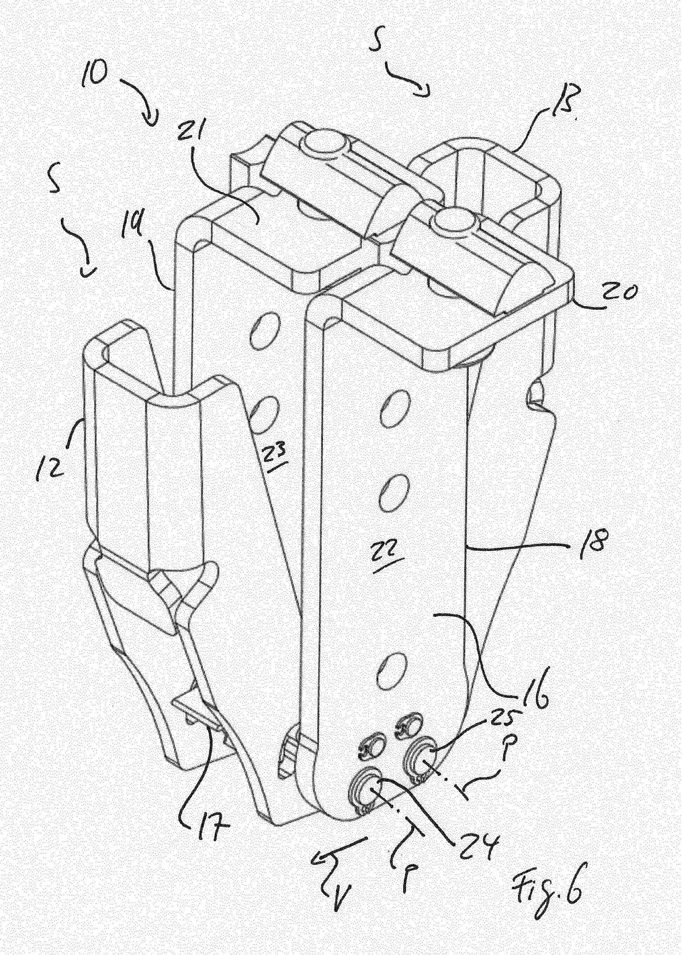

Figure 6 shows the support device 10 for selectively vertically supporting at least one of the storage containers 3 in the storage device 1 or in the feed device 100 of the exemplary embodiments of the previous figures in an enlarged perspective schematic view. The support device 10 may be advantageous independent of the storage device 1 or of the feed device.

The support device 10 comprises a base body 16 adapted to be fixed to a load-bearing structure element, e.g. the horizontal bar 13 of the storage device 1. The support device 10 comprises the at least one support arm 11, 12 that is connected to the base body 16 to be pivotable around a pivot axis P. The at least one support arm 11, 12 that has a supporting position S and a passing position. In its support position S, the at least one support arm 11, 12 is pivoted further away from the base body16 than in its passing position. The pivot axis P may extend parallel to one of the horizontal directions D, W and for example parallel to the horizontal direction W.

The holding mechanism may comprise at least one actuator element 17 that protrudes the at least one support arm 11, 12 in its passing position away from the base body 16 and/or in a protruding direction V that extends perpendicular to the pivot axis P. The protruding direction V may generally extend parallel to one of the horizontal directions D, W and for example parallel to the horizontal direction D.

The base body 16 may comprise at least one base plate 18 and for example two base plates 18, 19. The at least one base plate 18 or the two base plates 18, 19 may be L-Shaped with a fixing leg 20, 21 for fixing the support device to the load bearing member, and a mounting leg 22, 23 for mounting other components of the support device 10 and for example for mounting the at least one support arm 12, 13 via a mounting shaft 24, 25 that comprises the pivot axis P. For example, mounting leg 22, 23 may comprise an opening or though hole, through which the mounting shaft 24, 25 extends and in which the mounting shaft 24, 25 may be fixed by a snap ring.

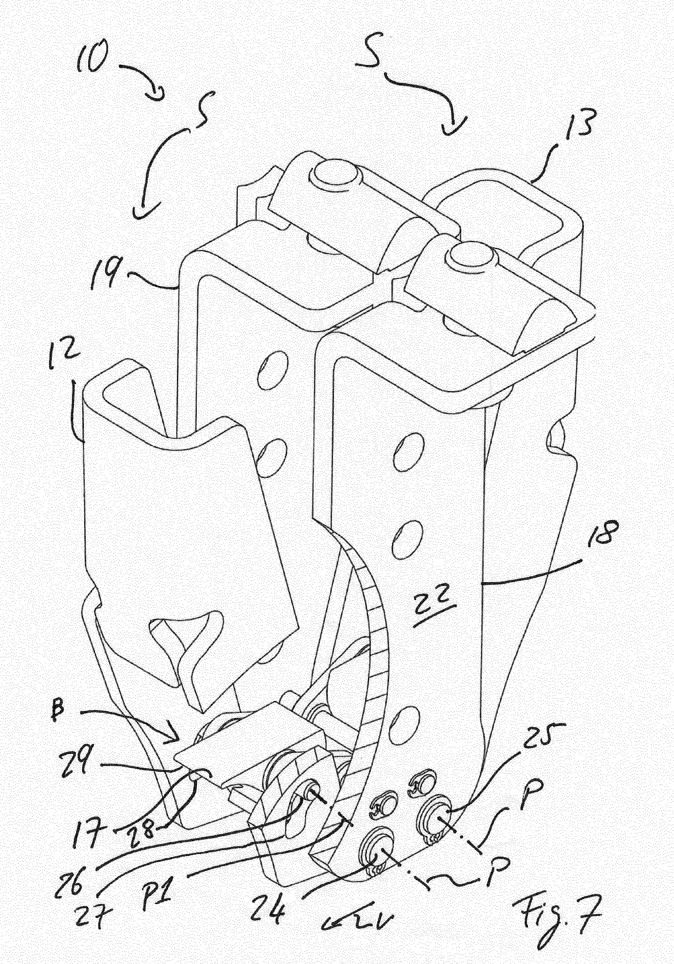

Figure 7 shows the view of figure 6 with parts of the base plate 18 removed.

The actuator element 17 may be connected to the support arm 12 to be pivotable around another pivot axis P1 and relative to the support arm 12. The other pivot axis P1 may be provided by another mounting shaft 26 and may be parallel to the pivot axis P. The other pivot axis P1 and/or the other mounting shaft 26 may be guided by a curved guide slot 27 that may be formed in the support arm 12. The support arm 12 may comprise two curved guide slots 27, 28 that at formed identically and are arranged one after the other along the other pivot axis P1. The curved guide slot 27 or the curved guide slots 27, 28 may be curved to extend around the pivot axis P.

Figure 7 shows the actuator element 17 exemplarily in its rest or basic position B. The support device 10 may be adapted such that the actuator element 17 automatically returns from a deflected position to its rest position B. In its deflected position, the actuator element 17 is pivoted out of its rest position B by an external force and around the pivot axis P1. For example, the other pivot axis P1 may be arranged between an actuating end 29 of the actuator element 17, the actuating end 19 being an extreme end of the actuator element 17 that faces away from the support device 10 and protruding from the support arm 12 in its passing position, and a center of mass of the actuator element 17. Thus, for example if the other pivot axis P1 is aligned horizontally, gravity will return the actuator element 17 from its deflected position back to its rest position B.

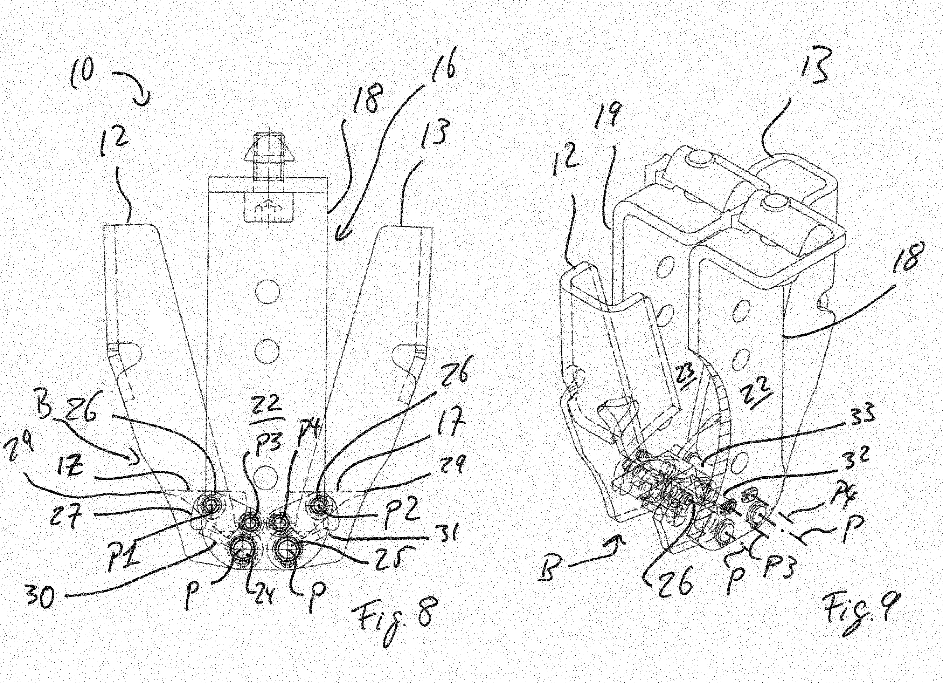

Figure 8 shows the support device 10 of the embodiment of the previous figures in a schematic side view, wherein the mounting leg 22 is depicted partly transparent, for the sake of ease of illustration.

As discernable from figure 8, the support device 10 may be formed symmetrically with respect to a plane of symmetry that extends between and parallel to the pivot axes P. Hence, for example, the support device 10 may comprise two support arms 12, 13 pivotable perpendicular to the plane of symmetry, and two actuator elements 17, whose free ends 29 face away from each other and from the plane of symmetry, wherein both of the actuator elements 17 comprise other pivot axes P1, P2 that may be arranged closer to each other than the free ends 29.

The support device 10 and for example its holding mechanism may comprise an entrained element 30. The actuator element 17 may be adapted to act as an entrainer for the entrained element 30, for example when the actuator element 17 is pivoted towards a free end of the support arm 12. The entrained element 30 may be connected to the actuator element 17 via the other pivot axis P1 and e.g. via the other mounting shaft 26, and to the base body 16 and e.g. to its mounting leg 22 via yet another pivot axis P3.

The symmetrical support device 10 may comprise another entrained element 31. The actuator element 17 connected to the support arm 13 may be adapted to act as an entrainer for the other entrained element 31, for example when the actuator element 17 is pivoted towards a free end of the support arm 13. The entrained element 31 may be connected to the actuator element 17 via the other pivot axis P2 and e.g. via a respective other mounting shaft 26, and to the base body 16 and e.g. to its mounting leg 22 via yet another pivot axis P4.

Figure 9 shows the exemplary embodiment of figure 8 in a perspective view and with the mounting leg 22 partly removed. As discernable from figure 9, the other pivot axis P3, P4 may be provided by further mounting shafts 32, 33 that may be mounted in further openings or through holes through the mounting legs 22, 23 of the base plates 18, 19. The other pivot axis P3, P4 may extend parallel to each other and/or to the pivot axes P.

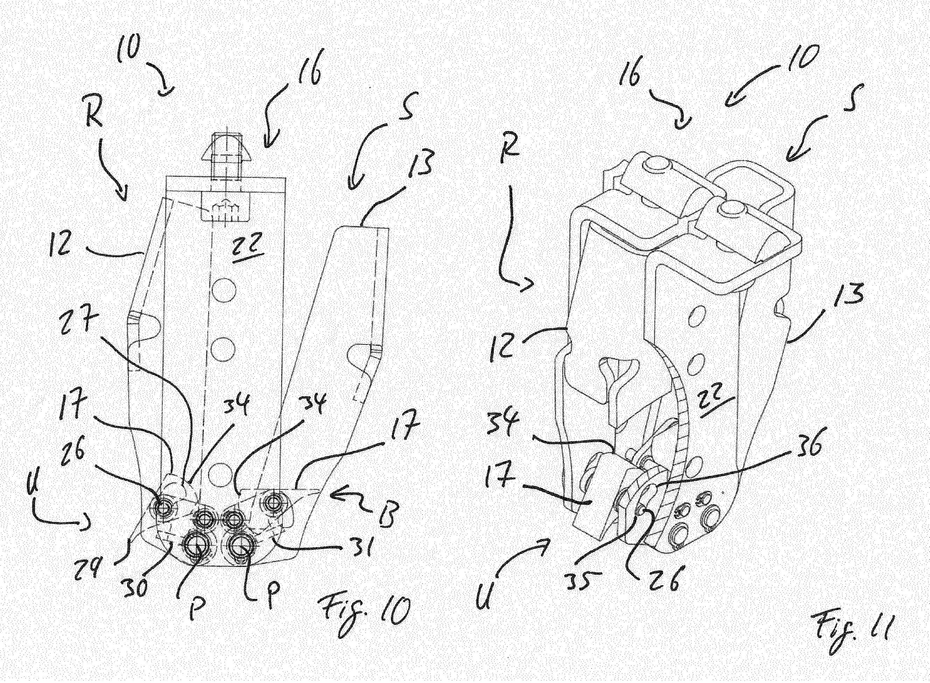

Figure 10 shows the support device 10 of the exemplary embodiment of the previous figures with one support arm 13 in the support position S and the other support arm 12 in the passing position R. The mounting leg 22 is depicted partly transparent, for the sake of simplicity. Further, the actuator element 17 connected to the support arm 12 is shown in its deflected position U in which it is held by an external force that may press the free actuating end 29 of the actuator element 17 in the mounted state of the support device 10 downwards, i.e. in the direction of gravity.

In its passing position R, the support arm 12 may be pivoted closer towards the base body 16 compared to its support position S. With the support arm 12, the curved guide slot 27 has been moved, such that the mounting shaft 26 may be arranged at a or even contact a lower end of the curved guide slot 27. The actuator element 17 may comprise an entrainer end 34 opposite of the actuating end 29. The mounting shaft 26 may be arranged between the entrainer end 34 and the actuating end 29. In the deflected position U, the entrainer end 34 may be moved away from the entrained element 30.

In the rest position B, the entrainer end 34 of the actuator element 17 may contact the entrained element 31. The contact between the entrainer end 34 and the entrained element 30, 31 may be independent of the position of the respective support arm 12, 13.

Figure 11 shows the embodiment of figure 10 in a schematic perspective view with the mounting leg 22 and the support arm 12 partly removed. As discernable from figure 11, the mounting shaft 26 may contact the lower end 35 of the curved guide slot 27 when support arm 12 is in its passing position R. The mounting shaft 26 may contact an upper end 36 of the curved guide slot 27 when support arm 12 is in its supporting position S. Which of the lower and upper ends 35, 36 is contacted by the mounting shaft 26 may be independent of the position B, U of the actuator element.

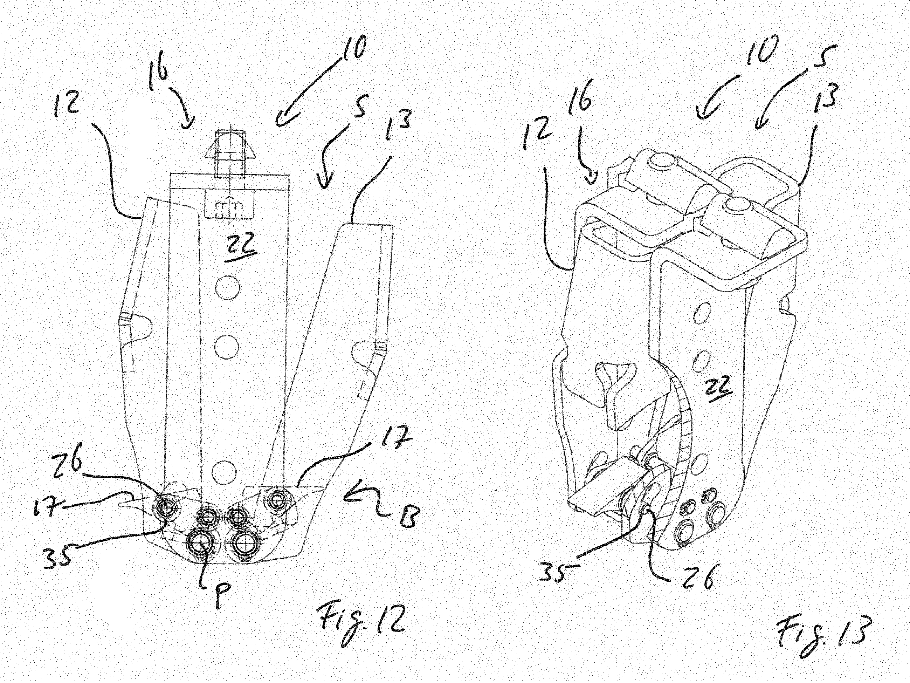

Figures 12 and 13 show the support device 10 of the exemplary embodiment of the previous figures with one support arm 12 in an intermediate position between the support position S and the passing position R, and the other support arm 13 in the support position S. The mounting leg 22 is depicted partly transparent, for the sake of simplicity. The lower end 35 is slightly removed from the mounting shaft 26 in a counterclockwise direction around the pivot axis P, i.e. away from the base body 16.

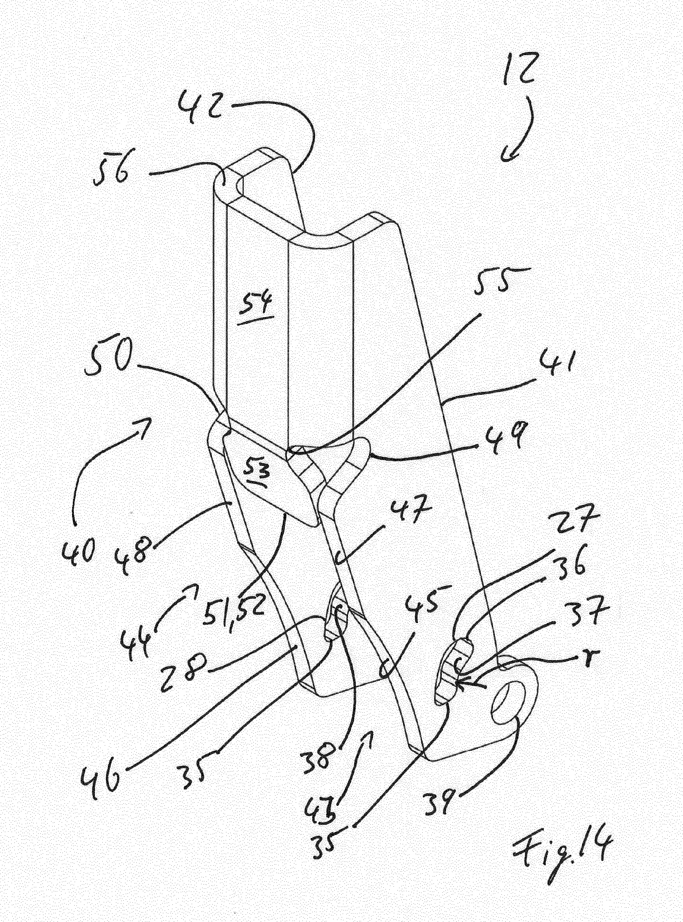

Figure 14 schematically shows the support arm 12 of the exemplary embodiment of the previous figures in a perspective view. In case the support device 10 is formed with two support arms 12, 13 and/or symmetrically, both support arms 12, 13 may be formed identically. In the following, however, merely support arm 12 is described, for the sake of brevity.

The support arm 12 may be formed by punching its base form out of a sheet of metal and by bending the punched sheet into the form of the depicted support arm 12, which facilitates inexpensive production of the support arm 12.

The curved guide slots 26, 27 may each comprise a holding end, a release end and an inner surface 37, 38 that connects the holding end and the release end. The holding end may be the lower end 35 and the release end may be the upper end 35.

The inner surface 37, 38 may face away from the pivot axis P of the support arm 12 as defined by the at least one opening or through hole 39, where in a curvature of the inner surface at the holding end has a radius with its center arranged outside of the pivot axis of the support arm 12.

The center of the radius r of the curvature of the inner surface 37, 38 at the holding end of the guide slot 27, 28 may correspond to or coincide with a central axis of the other pivot axis and/or is further away from the pivot axis P of the support arm 12 than the other pivot axis (P3 for support arm 12, P4 for support arm 13). Therefore, at the lower end 35 of the curved guide slot 27, 38, the curvature of the inner surface 37, 38 may be dimensioned such that the support arm 12 is held in its passing position R by the mounting shaft 26, e.g. in a self-locking or self-retaining manner.

The center of the radius r of the curvature of the inner surface 37, 38 at the release end may differ from or be the same as the radius r of the curvature of the inner surface 37, 38 at the holding end. For example, the center of the radius r of the curvature of the inner surface 37, 38 at the release end may be arranged closer to the pivot axis P of the support arm 12 than the center of the radius r of the curvature of the inner surface 37, 38 at the holding end. For example, the center of the radius r of the curvature of the inner surface 37, 38 at the release end may correspond to or coincide with the pivot axis P.

The support arm 12 may be formed with a front section 40 that faces away from the base body 16. The front section 40 may be a central section of the punched sheet. The front section 40 may interconnect ends of two lateral legs 41, 42, which may be parts of the punched sheet to are bent to extend from the front section towards the base body 16. The lateral legs 41, 42 may comprise the curved guide slots 27, 28 and the openings 39.

Frontal faces 43, 44 of the lateral legs 41, 42 may face away from the base body 16. The frontal faces 43, 44 may each comprise a concave section 45, 46 that bends away from the respective opening 30 when extending towards the front section 40. Between the front section 40 and the concave sections 45, 46, the front faces 43, 44 may comprise a straight section 47, 48 that may directly follow the respective concave section 45, 46. The straight section 47, 48 may be arranged between the respective concave section 45, 46 and a recessed section 49, 50, which facilitates production of the support arm 12 by bending. At the recessed sections 49, 50, the frontal faces 43, 44 may approach a rear side of the respective lateral leg 41, 42, the rear side being arranged opposite the respective frontal face 43, 44. The curvature of the concave sections 45, 46 may allow for a smooth movement of the support arm 12 from its support position S towards its passing position R when a storage container 4 is inserted into one of the support columns 3 and contacts the concave sections 45, 46. The straight sections 47, 48 may be dimensioned to border on the respective storage column 3 and/or on a storage container 4 when the storage container 4 is inserted into the storage column 3. In this case, the support arm 12 may be in its passing position R and the straight sections may extend parallel to the storage column 3 and/or to the vertical direction H.

Between the recessed sections 49, 50, the support arm 12 may comprise a guide tongue 51. The guide tongue 51 may have a free and 52 that is level with or surmounted by the straight sections 47, 48 away from the base body 16. A guide face 53 of the guide tongue 51 that faces away from the base body 16 may smoothly transition into a contact surface 54 that faces away from the base body 16. The contact surface 54 may be a face of the front section 40 and may interconnect the lateral legs 41, 42. An angle between the contact surface 54 and the straight sections 47, 48 and/or the guide face 53 may be less than 180° and for example less than 170°, less than 160° or even less than 150°.

The guide tongue 51 may comprise a base 55 with a width that is less than a width of the remaining guide tongue 51 and in particular of a middle section of the guide tongue 51 that interconnects the base 55 and the free end 52. The smaller width of the base 55 may facilitate bending the guide tongue 51 with respect to the contact surface 54.

The guide tongue 51 may reduce the risk that a storage container 4 when being inserted into one of the storage columns 3 catches with one of the recessed sections 49, 50.

The support arm 12 may comprise a support face 56 that faces upwards at least when the support arm 12 is in its support position S. In the support position, the support face 56 may be aligned horizontally. At least between the guide tongue 51 and the support face 56, the support arm 12 may a U-shaped cross-section, the cross-sectional plane extending horizontally. The angle between the may be dimensioned to avoid that the contact surface 54 and the straight sections 47, 48 and/or the guide face 53 may be dimensioned to avoid that the support face 56 extends into the storage column 3 to avoid collisions with a storage container 4 when it is to be removed from the storage column 3 and, hence, moved downwards.

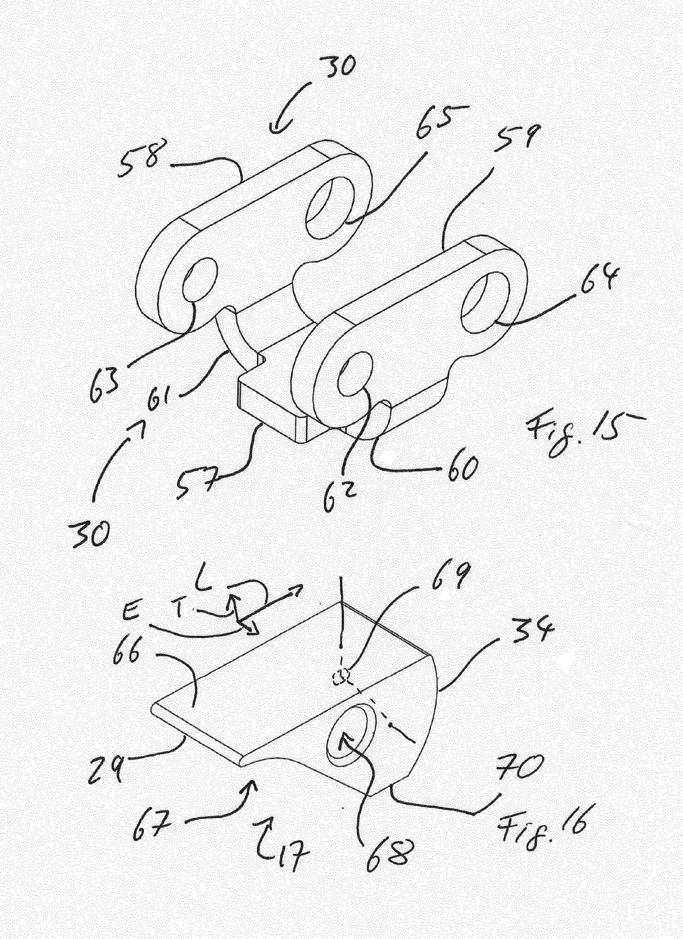

Figure 15 shows the entrained element 30 of the exemplary embodiment of the previous figures. In case the support device 10 is formed with two entrained elements 30, 31 and/or symmetrically, both entrained elements 30, 31 may be formed identically. In the following, however, merely entrained element 30 is described, for the sake of brevity

The entrained element 30 may comprise a contact element 57 that may contact the actuator element 17 and in particular the entrainer end 34 thereof when the actuator element 17 is in its rest position B. The entrainer end 34 may rest on the contact element 57 by virtue of gravity. For example, the contact element 57 may be a contact plate.

The entrained element 30 may comprise at least one and preferably two mounting plates 58, 59. The mounting plates 58, 59 may be aligned parallel to each other and/or perpendicular to the contact element 57.

The entrained element 30 may comprise at least one and preferably two connecting arms 60, 61. The connecting arms 60, 61 may each interconnect the contact element 57 and one of the mounting plates 58, 59. The connecting arms 60, 61 may protrude from opposite sides of the contact element 57 and may have a curved shape that transitions from being parallel to the contact element 57 to being parallel to one of the mounting plates 58, 59. A width of the connecting arms 60, 61 perpendicular to a distance between the mounting plates 58, 59 may be less than a width of the contact element 57 in the same direction.

The mounting plates 58, 59 may have outer sides that face away from the respective other mounting plate 58, 59. A distance between the outer sides may be determined such that the entrained element 30 can be inserted between the lateral legs 41, 42 without play.

Each of the mounting plates 58, 59 may comprise a mounting opening or through hole 62, 63 for at least sectionwise receiving the mounting shaft 26. Each of the mounting plates 58, 59 may comprise a mounting opening or through hole 64, 65 for at least sectionwise receiving the mounting shaft 32. A distance between the mounting openings 62, 64 and/or between the mounting openings 63, 65 in the direction perpendicular to the distance between the mounting plates 58, 59 may be greater than the width of at least one or even both of the connecting arms 61, 62.

Figure 16 shows the actuator element 17 of the exemplary embodiment of the previous figures. In case the support device 10 is formed with two actuator elements 17and/or symmetrically, both actuator element 17may be formed identically. In the following, however, merely one of the actuator elements 17 is described, for the sake of brevity.

The actuator element 17 extends from its actuating end 29, that may interact and even contact a storage container 4 when loading the storage container 4 to or unloading the storage container 4 from the respective storage column 3, towards its entrainer end 34 along a length directions L. Perpendicular to the length direction L, a width direction E of the actuator element 17 may extend, along which the actuating end 29 may be aligned. A height direction T of the actuator element 17 may extend perpendicular to the length direction L and the width direction E.

An upper surface 66 of the actuator element 17 may face in the height direction T and may be aligned perpendicular thereto. The upper surface 66 may be flat. The actuator element 17 may comprise a lower surface 67 opposite of the upper surface 66. The lower surface 67 may extend away from the upper surface 66 when extending from the actuating end 29 towards the entrainer end 34. Hence, the actuator element 17 may become thicker from the actuating end 29 towards the entrainer end 34.

The actuator element 17 may comprise a mounting opening or through hole 68 for receiving the mounting shaft 26. The mounting opening 68 may extend along the width direction E. The entrainer end 34 may at least sectionwise be curved around the mounting opening 68.

Due to the increasing thickness of the actuator element 17 along the lengths direction L, the actuator element 17 may comprise a center of gravity 69 that is arranged between the mounting opening 68 or at least the central axis thereof and the entrainer end 34. Due to the position of the center of gravity 69, the actuator element 17 remains in its rest position B unless deflected by forces caused e.g. contact of the actuating end 29 with a storage container 3 moving through the storage column 4.

Between the entrainer end 34 and the lower surface 67, the actuator element 17 may comprise a locking surface 70. The locking surface 70 may be flat and aligned perpendicular to the height direction T and/or the upper surface 66. Between the upper surface 66 and the locking surface 70, the thickness of the actuator element 17 may have its maximum.

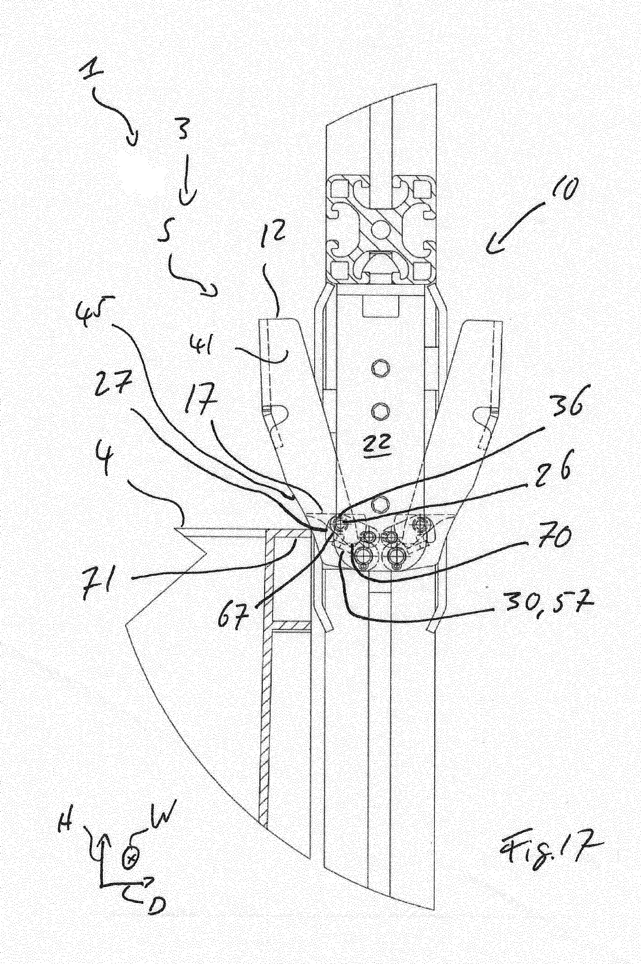

Figure 17 to 24 show how to load a storage container 4 from below into one of the storage columns 3 of the storage device 1 according to the exemplary embodiment of the previous figures. The mounting leg 22 and the lateral leg 41 are partly shown transparent, for improving the presentation.

In figure 17, the storage container 4 is loaded or inserted into the storage column 3 from below, i.e. in the vertical direction H. An access opening of the storage container 4 faces upwards, i.e. against gravity, such that goods stored in the storage container 4 cannot fall out of the storage container 4 via the access opening. The access opening is surrounded by an upper edge 71 of the storage container 4. The upper edge 71 may be formed as a collar or flange extending parallel to and away from the access opening. Such storage containers 4 are well known in the art and for example available from BITO, e.g. as type XL64271. A storage container 4 for use with the support device 10 may comprise at least one collar or flange extending parallel to and away from the access opening.

Due to gravity, the lower surface 67 of the actuator element 17 may rest on the contact element 57 of the entrained element 30. In particular, a part of the lower surface 67 that contacts the locking surface 70 may contact the contact element 57, whereas the locking surface 70 may at least sectionwise be arranged at a distance to the contact element 57. The upper end 36 of the curved guide slot 27 may rest on the mounting shaft 26.

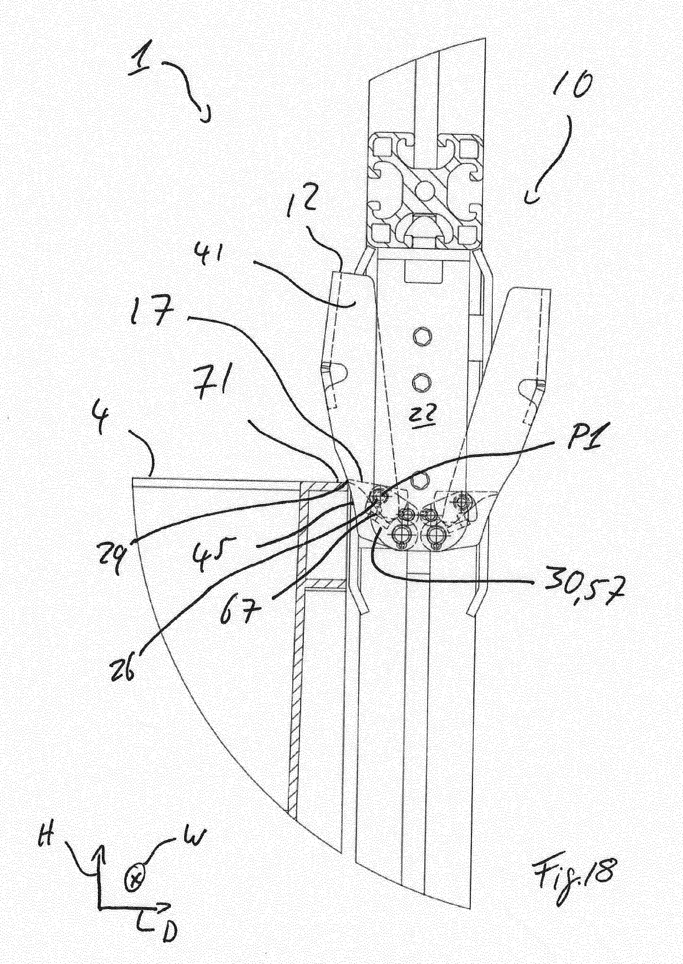

At first, the upper edge 71 may contact the concave sections 45, 46 of the support arm 12. When moving the storage container 4 further along the vertical direction H, the upper edge 71 slides along the concave sections 45, 46 and moves the support arm 12 from its supporting position S closer to the mounting leg 22, i.e. towards its passing position R, as shown in figure 18. The support arm 12 may pivot around its pivot axis P provided by the mounting shaft 24. While sliding along the concave sections 45, 46, the storage container 4 and in particular its upper edge 71 may contact the actuating end 29 of the actuator element 17 and may pivot the actuating end 20 upwards, i.e. along the vertical direction H. In particular, the actuator element 17 may seek to pivot around the pivot axis P1 provided by the mounting shaft 26. Yet, due to the contact of the lower surface 67 with the contact element 57, rotation around the pivot axis P1 is hindered or blocked. Instead, the actuator element 17 may pivot together with the entrained element 30 around the pivot axis P3 provided by the mounting shaft 32.

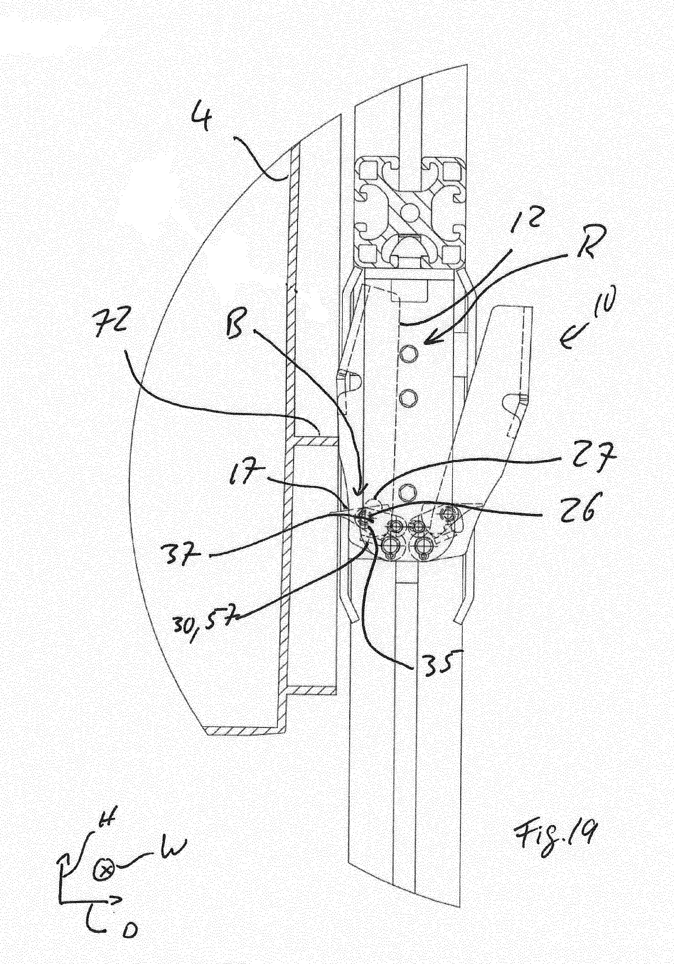

While figure 19 shows a different collar or flange 72 instead of the upper edge 71, the interaction between the component of the support device 10 with each other and with the storage container 4 would be the same of the upper edge 71 would be moved further upwards.

The support arm 12 has been moved to its passing position R by the storage container 4. In the passing position R, the curved guide slot 27 has moved with the support arm 12, such that its lower wend 35 accommodates the mounting shaft 26.

The actuator element 17 is shown arranged in its rest position and contacts the contact element 57.

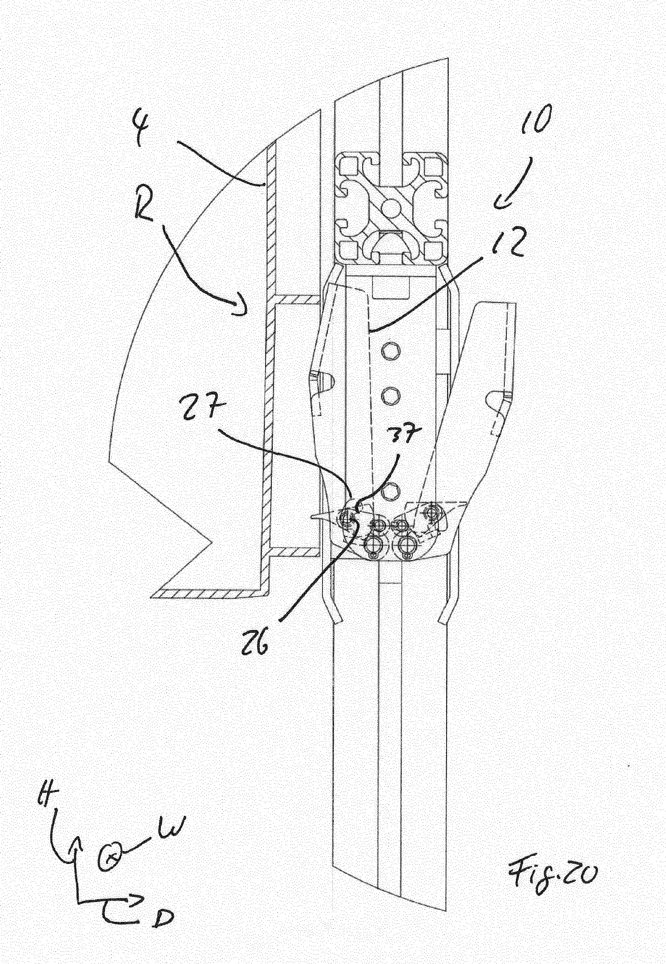

In figure 20, the storage container 4 has been moved upwards, i.e. further along the vertical direction H, such that there is not direct physical contact between the storage container 4 and the support arm 12.

Due to the curvature of the inner surface 37 of the curved guide slot 27, the mounting shaft 26 holds the support arm 12 in its passing position R. The curvature of the inner surface 37 and the connection between the mounting shaft 26 and the inner surface 37 blocks the support arm 12 from moving out of its passing position R towards its supporting position S.

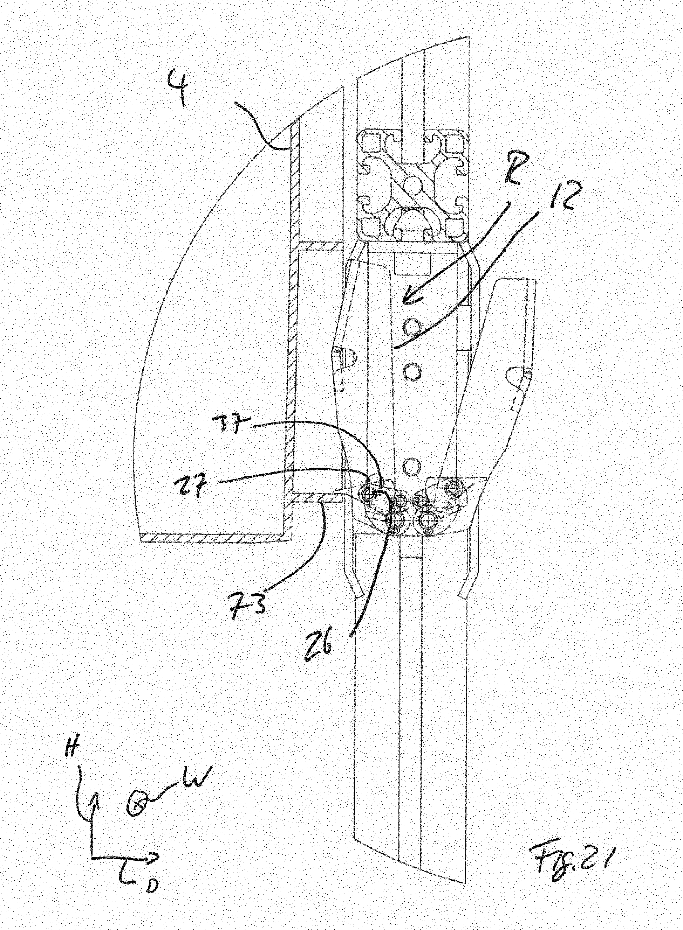

In figure 21, the storage container 4 has been moved further upwards, i.e. along the vertical direction H. The storage container 4 may comprise a consecutive collar or flange 73 that it further away from the access opening than the upper edge 71 or, in case the storage container 4 comprises the collar or flange 72, than the collar or flange 72. The collar or flange 72 is not required.

The storage container 4 has been moved further upwards until the collar or flange 73 contacts the actuating end 29, which protrudes from the support arm 12 if the support arm 12 is in its passing position R. The mounting shaft 26 in cooperation with the inner surface 37 of the curved guide slot 27 still blocks the movement of the support arm 12 out of its passing position R.

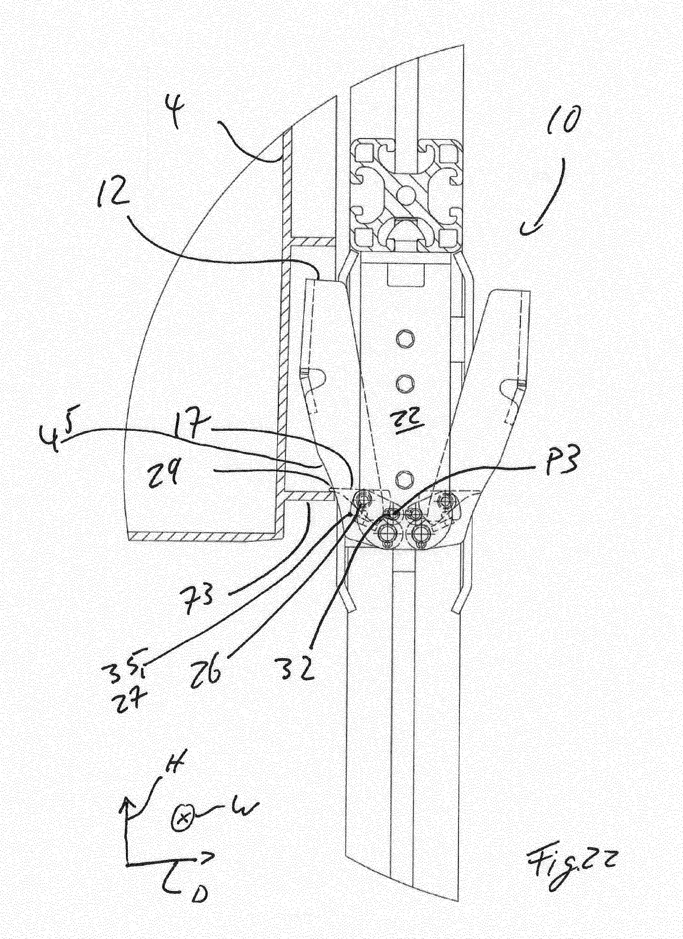

In figure 22, the storage container 4 has been moved even further upwards, i.e. along the vertical direction H. The consecutive collar or flange 73 moved the actuating end 29 in the same direction. As the actuator element 17 contacts the entrained element 30, the actuator element 17 and the entrained element 30 pivot together around the pivot axis P3 provided by the mounting shaft 32. This movement also moves the mounting shaft 26 away from the lower end 35 of the curved guide slot 27. Hence, the movement of the support arm 12 away from the mounting leg 22 is not further blocked. Therefore, the support arm 12 has moved out of its passing position R and is shown in an intermediate position between its passing position R and its supporting position S. The consecutive collar or flange 73 contacts the concave sections 45, 46 and holds the support arm 12 in the intermediate position.

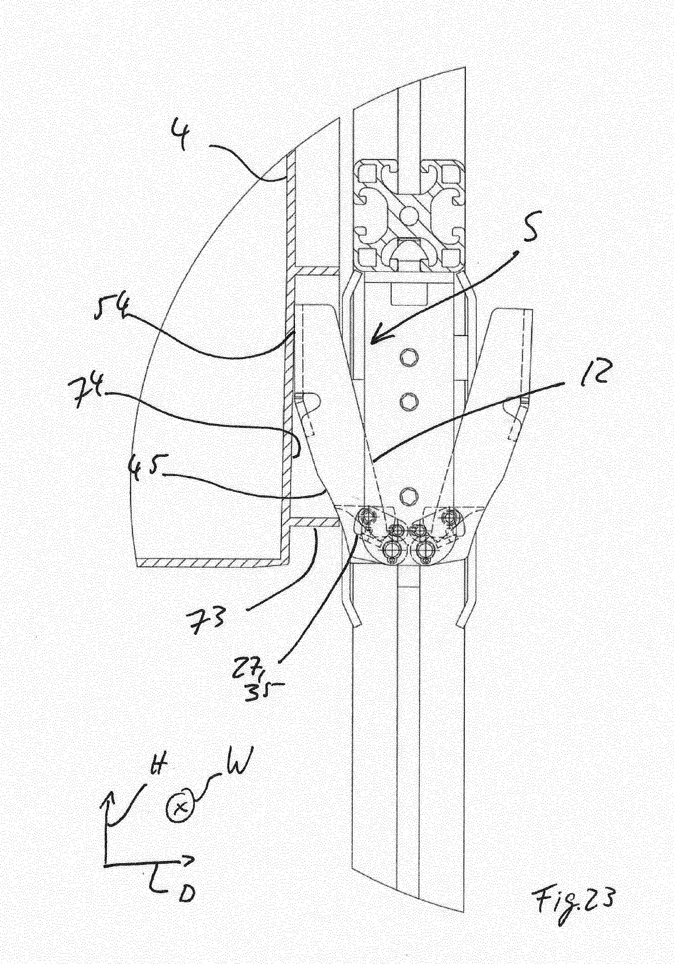

In figure 23, the storage container 4 has been moved downwards, i.e. against the vertical direction H. The consecutive collar or flange 73 may or may not contact the concave section 45 anymore, but in particular may not press the support arm 12 towards its passing position R. As the mounting shaft 26 is no longer accommodated in the lower end 35 of the curved guide slot 27, the support arm 12 moved further towards its supporting position S, in which it is shown. In the supporting position S, the contact surface 54 may contact an outer side 74 of the support container 4. The consecutive collar or flange 73 and/or the upper edge 71 may protrude from the outer side 74.

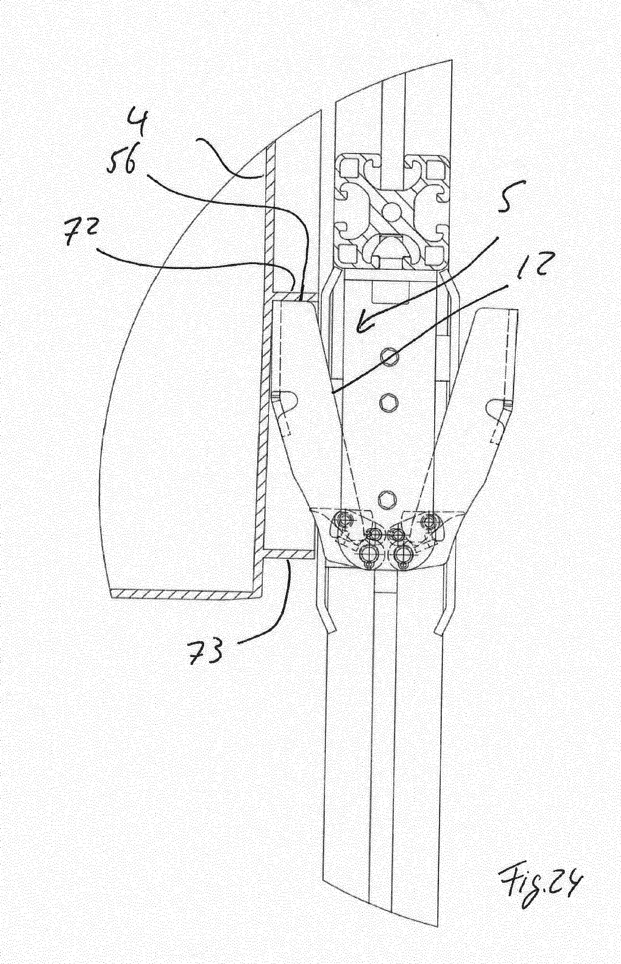

In figure 24, the storage container 4 has been moved further downwards, i.e. against the vertical direction H. The collar or flange 72 rests on the support face 56 of the support arm 12. Alternatively, in case the collar or flange 72 should not be present, the upper edge 71 would rest on the support face 56.

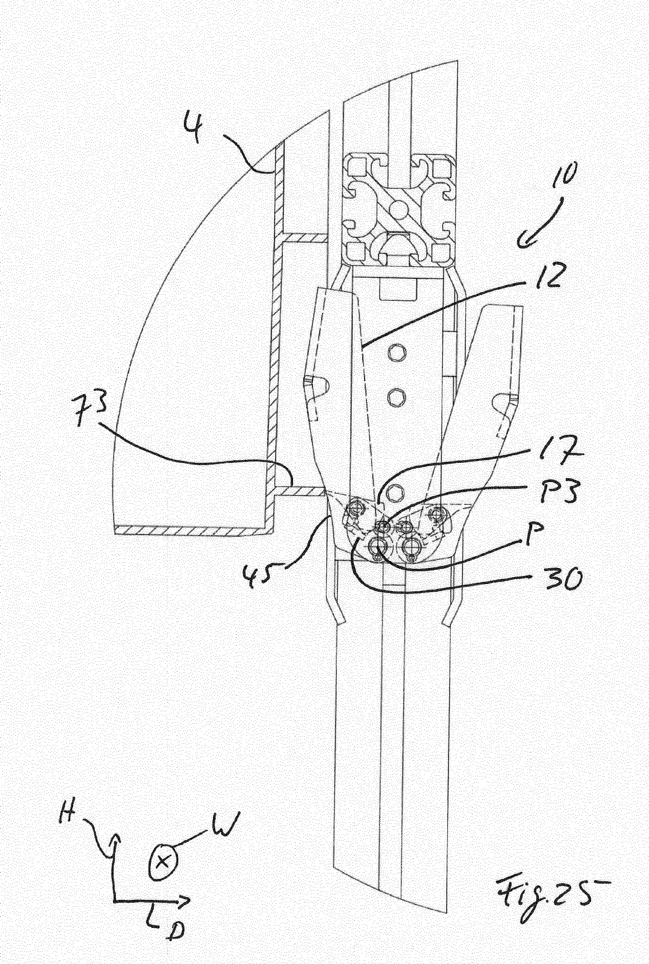

Figure 25 to 33 show how to load a storage container 4 from below into one of the storage columns 3 of the storage device 1 according to the exemplary embodiment of the previous figures. The mounting leg 22 and the lateral leg 41 are partly shown transparent, for improving the presentation.

Prior to the state shown in figure 25, the storage container 4 may have been in the state depicted in figure 24, i.e. being supported by at least the support arm 12. To move the storage container 4 downwards, i.e. against the vertical direction H and e.g. towards the distribution level 5, the storage container 4 is first moved upwards, i.e. in the vertical direction and away from the distribution level 5. The consecutive collar or flange 73 slides on the concave sections 45, 46 and thereby moves the support arm 12 around the pivot axis P out of its support position S towards its passing position R. Simultaneously, the consecutive collar or flange 73 pivots the actuator element 17 and the entrained element 30 around the pivot axis P3 in the same direction as the support arm 12.

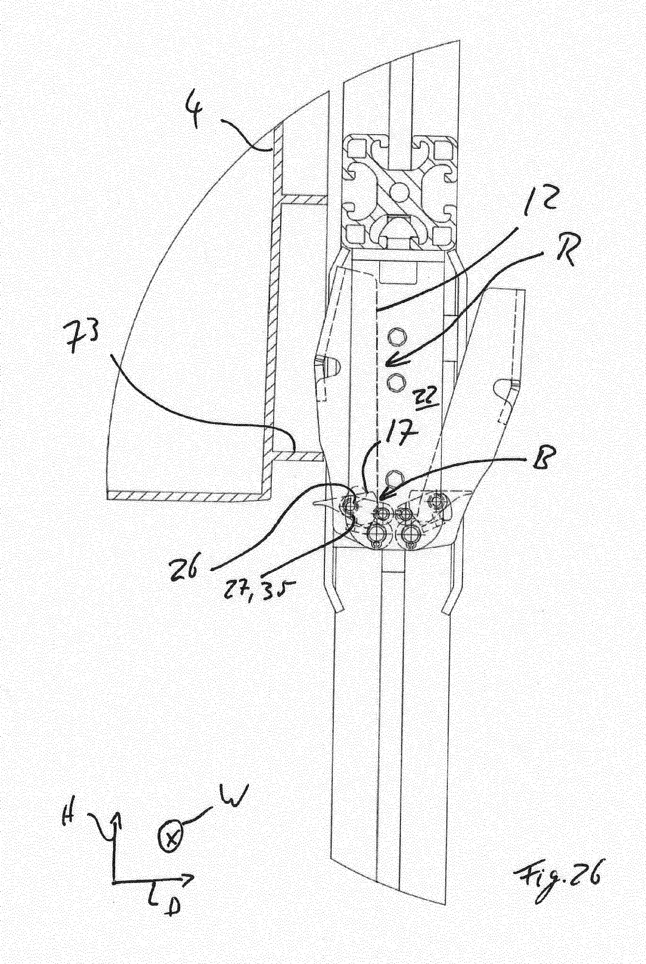

In figure 26, the consecutive collar or flange 73 has been moved further upwards and past the actuator element 17 and has moved the support arm 12 into its passing position R, in which the mounting shaft 26 is accommodated in the lower end 35 of the curved guide slots 27, 28. Due to the curvature of the curved guide slots 27, 28 at the lower ends 35 thereof, the mounting shaft 26 blocks movements of the support arm 12 away from the mounting leg 22 and towards its support position S.

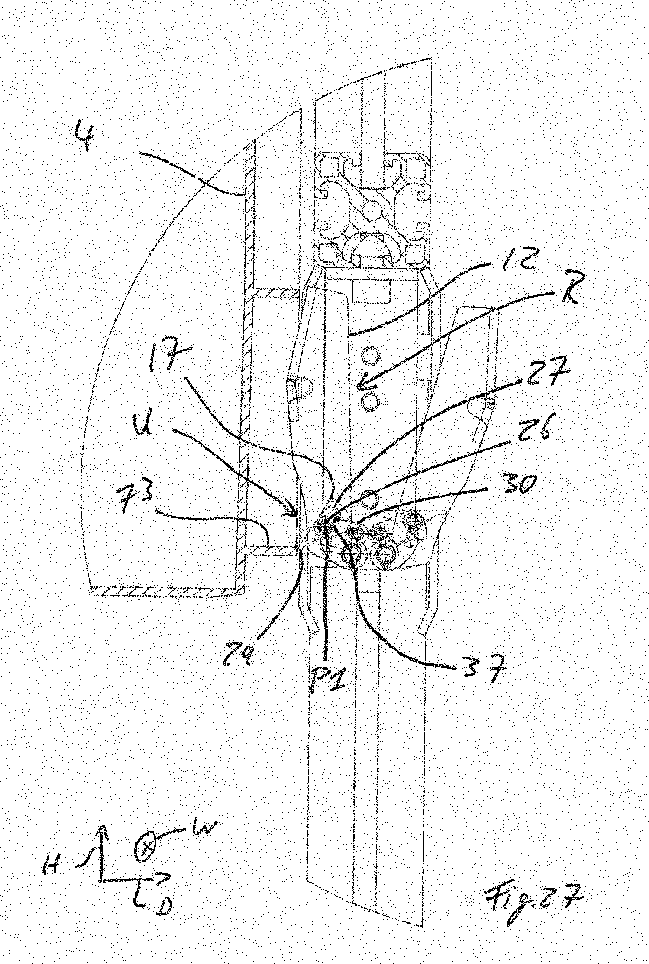

In figure 27, the storage container 4 has been moved downwards. The consecutive collar or flange 73 has contacted the actuating end 29 of the actuator element 17 and pivoted the actuating end 29 around the pivot axis P1 into its deflected position U. The actuator element 17 can be freely pivoted from its rest position B shown in figure 26 into its deflected position U and is in particular not hindered by the entrained element 30. Thus, the support arm 12 remains to be held in its passing position R by the mounting shaft 26 and the inner surfaces 37, 38 of the curved guide slots 27, 29 at their lower ends 35.

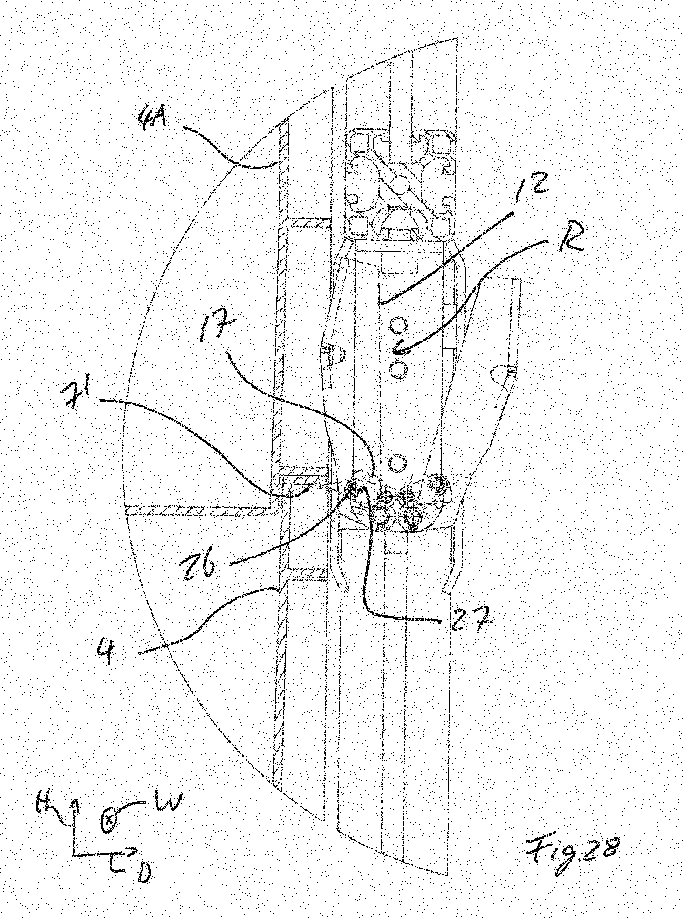

In figure 28, the storage container 4 has been moved further downwards. Another storage container 4A is stacked in the storage container 4. In the shown example embodiment, only the storage container 4, but not the other storage container 4A shall be moved to the distribution level 5.

The upper edge 71 of the support container 4 has been moved downwards until it is in contact with the actuator element 17, which will be pivoted by the upper edge 71 when the upper edge 71 is further moved downwards without affecting the lock of the support arm 12 in its passing position R by the mounting shaft 26 and the curved guide slot 27.

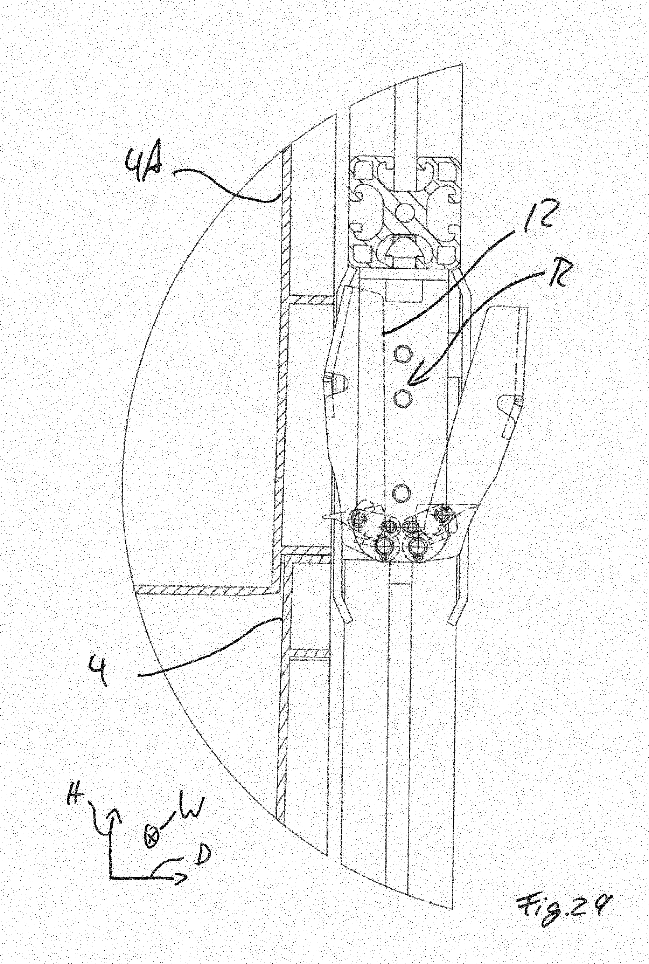

In figure 29, the storage container 4 has been moved even further downwards. In the shown state, neither the storage container 4 nor the storage container 4A may contact the support arm 12, which may still be held in its passing position R by the lock of the support arm 12 with the mounting shaft 26 and the curved guide slot 27.

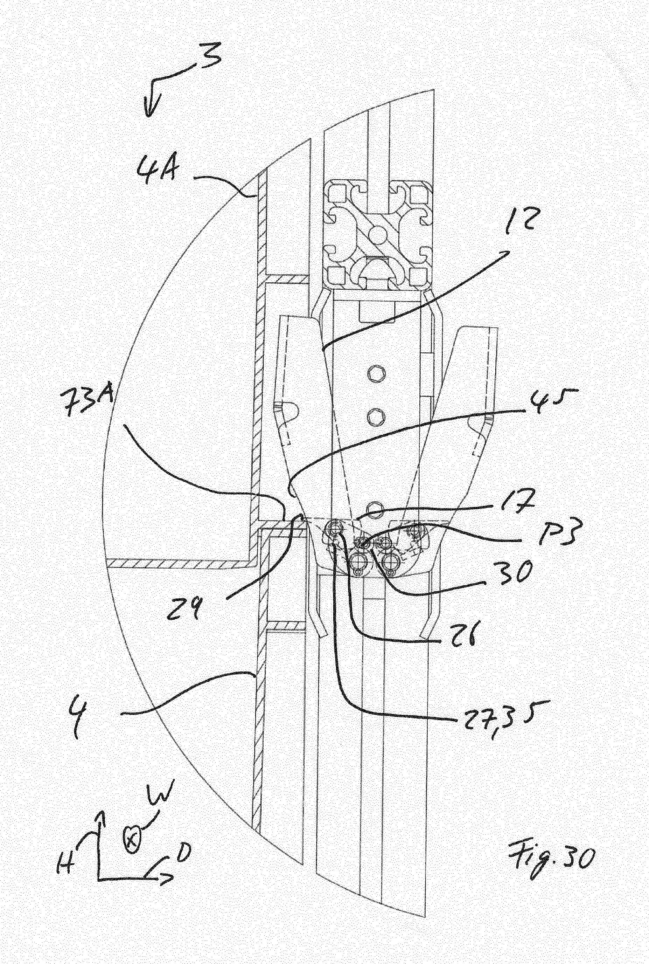

To be able to keep the other storage container 4A in the storage column 3, both storage containers 4, 4A are moved upwards again, as shown in figure 30. In the state shown in figure 30, the consecutive collar or flange 73A of the other storage container 4A contacts the concave sections 45, 46 of the support arm 12 and has moved the mounting shaft 26 out of its locking position at the lower ends 35 of the curved guide slots 27, 28 by pivoting the actuator element 17 and the entrained element 30 upwards around the pivot axis P3. Thus, the support arm 12 can and has moved out of its passing position R and is held in the intermediate position by the consecutive collar or flange 73A that contacts the concave sections 45, 46.

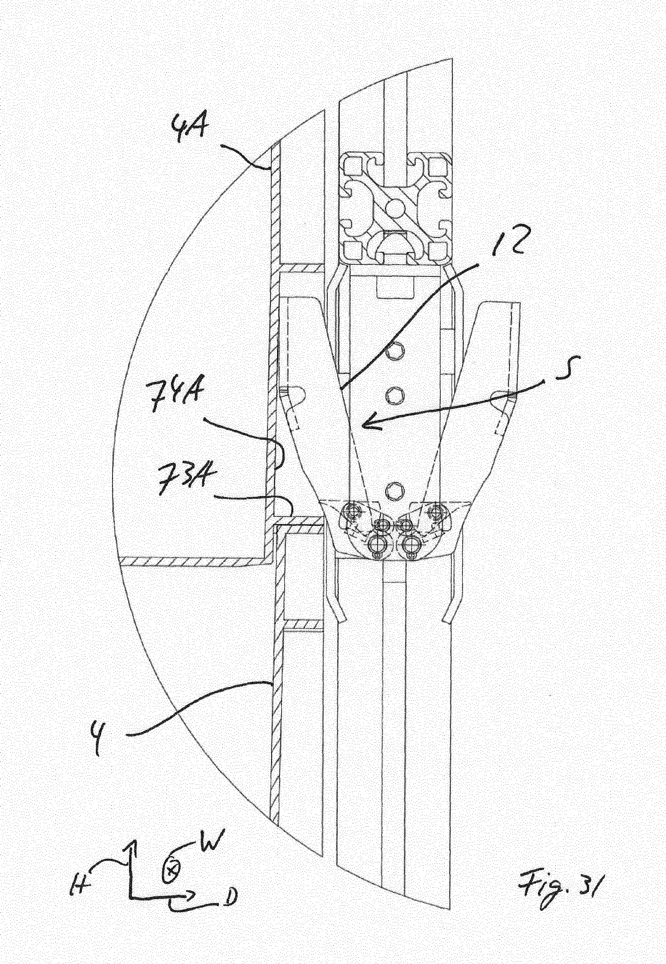

When moving the storage containers 4, 4A even further downwards, the consecutive collar or flange 73A may be moved out of contact with the concave sections 45, 46, such that the support arm 12 can move into its support position S, in which it may rest against the outer side 74A of the other storage container 4A, which is shown in figure 31.

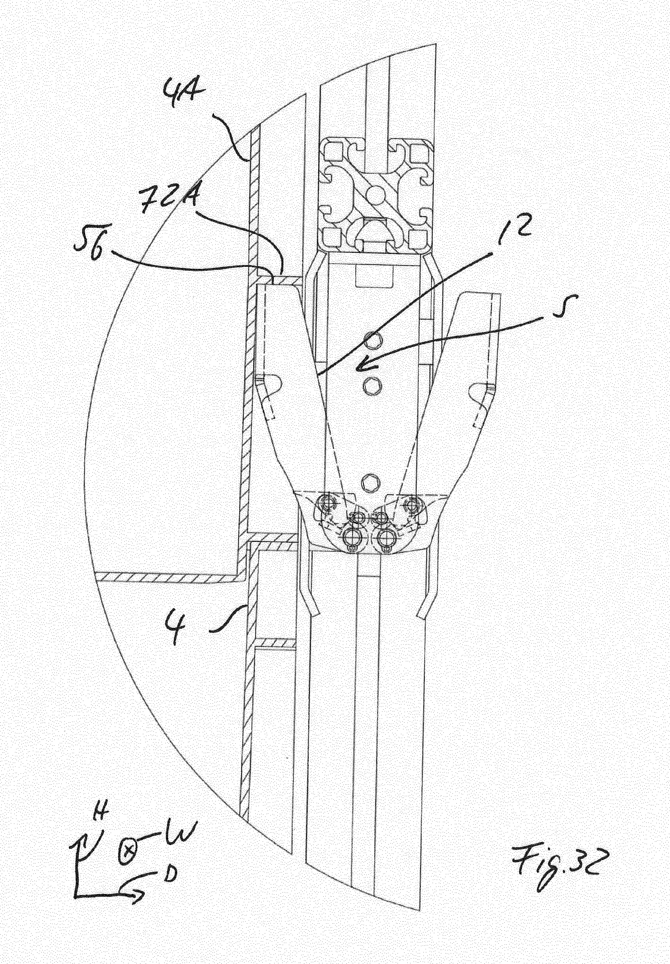

In figure 32, the storage containers 4, 4A are moved even further downwards, such that the other storage container 4A is supported on the support face 56. In particular, the collar or flange 72A or the not shown upper edge of the other support container 4A may contact the support face 56 of the support arm 12 arranged in its support position S.

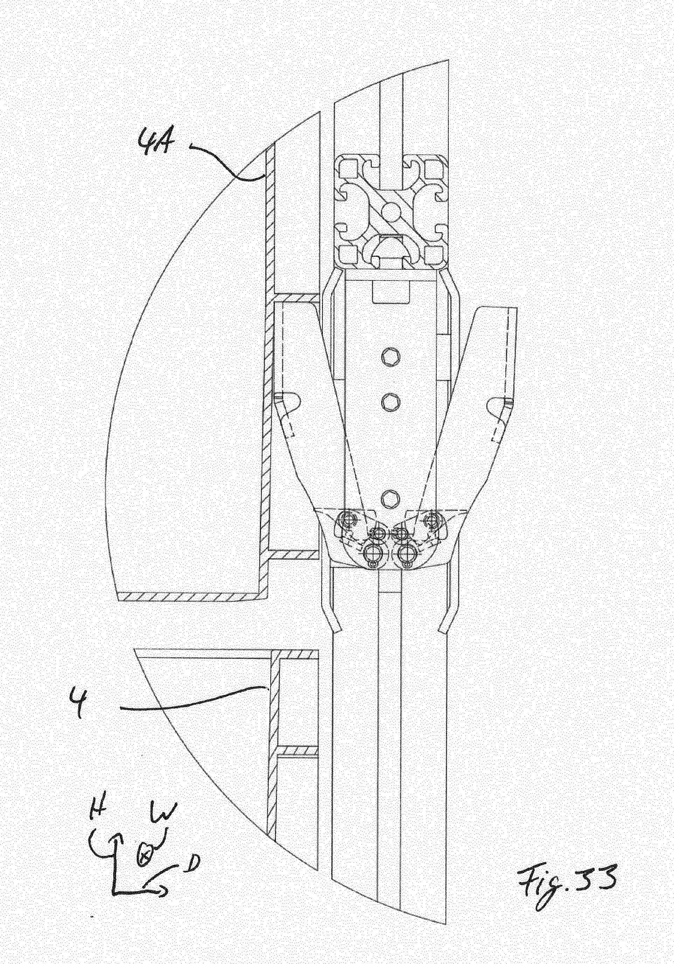

In figure 33, the storage container 4 has been moved even further downwards. As the other storage container 4A is supported at least by the support arm 12, the other storage container 4A does not follow the storage container 4 towards the distribution level 5.

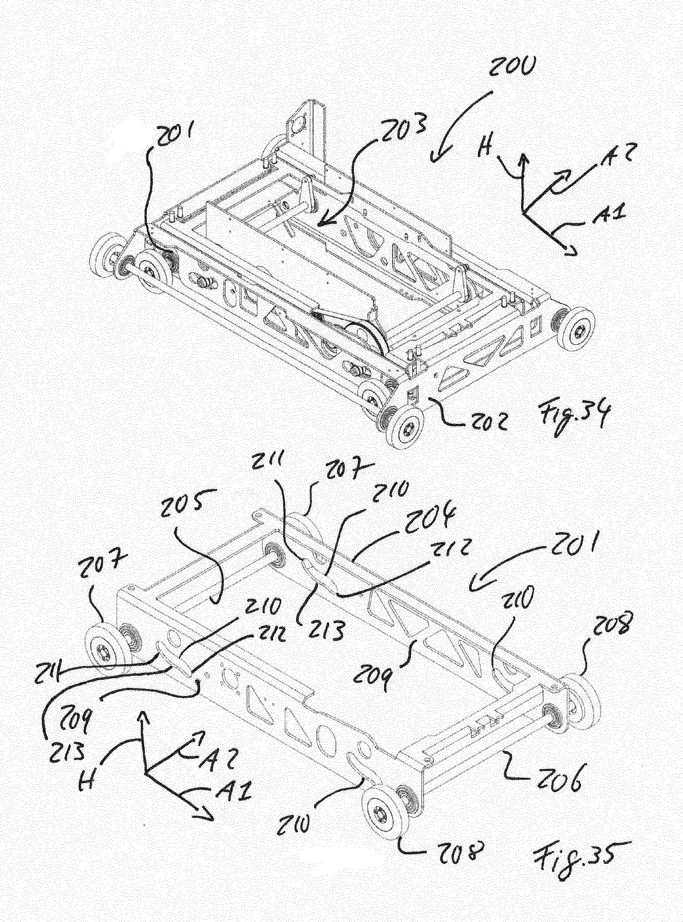

Figures 34 to 43 show an exemplary embodiment of a storage container mover for moving a storage container horizontally in various schematic views. In particular, the storage container mover may be a storage container mover for moving storage containers 4 within the distribution level 5 or between the storage device 1 and the feed device 100.

Figure 34 depicts the storage container mover 200 in a schematic perspective view. The storage container mover 200 comprises a first chassis 201 with a first predetermined driving direction A1, a second chassis 202 with a second predetermined driving direction A2 that differs from the first predetermined divining direction A1, and a lifting device 203 that is adapted to lift one of the first and second chassis 201, 202 relative to the other one of the first and second chassis 201, 202. In particular, the lifting device 203 may be adapted to lift one of the first and second chassis 201, 202 in the vertical direction. When used with the storage device 1 or with the storage device 1 and the feed device 100, the first predetermined driving direction A1 may correspond to one of the horizontal directions D, W, and the second predetermined driving direction A2 my correspond to the other one of the horizontal directions D, W.

Figure 35 depicts the first chassis 201 of the exemplary embodiment of figure 34, only. The first chassis 201 may comprise a base frame 204, in which two axles 205, 206 are mounted. The axles 205, 206 each comprise two wheels 207, 208. The axles 205, 206 extend perpendicular to the first predetermined driving direction A1 and the wheels 207, 208 are aligned such that the first chassis 201 can only drive along the first predetermined driving direction A1.

The first chassis 201 and for example the base frame 204 may comprise a lateral sidewall 209 or even a pair of parallel lateral side walls 209 that extends parallel to the first predetermined driving direction A1. The lateral sidewall 209 or each of the pair of the lateral side walls 209 may comprise a lifting slot 210.

The lifting slot 210 of the lateral side wall or of or each of the pair of the lateral side walls 209 may comprise two end sections 211, 212 curved in opposite directions with a transition section 213 there between.

In particular, first chassis 201 and for example the base frame 204 may comprise the pair of parallel lateral side walls 209, wherein each of the lateral side walls 209 comprises two lifting slots 210, which may be arranged closer to the axles 205, 206 than to each other.

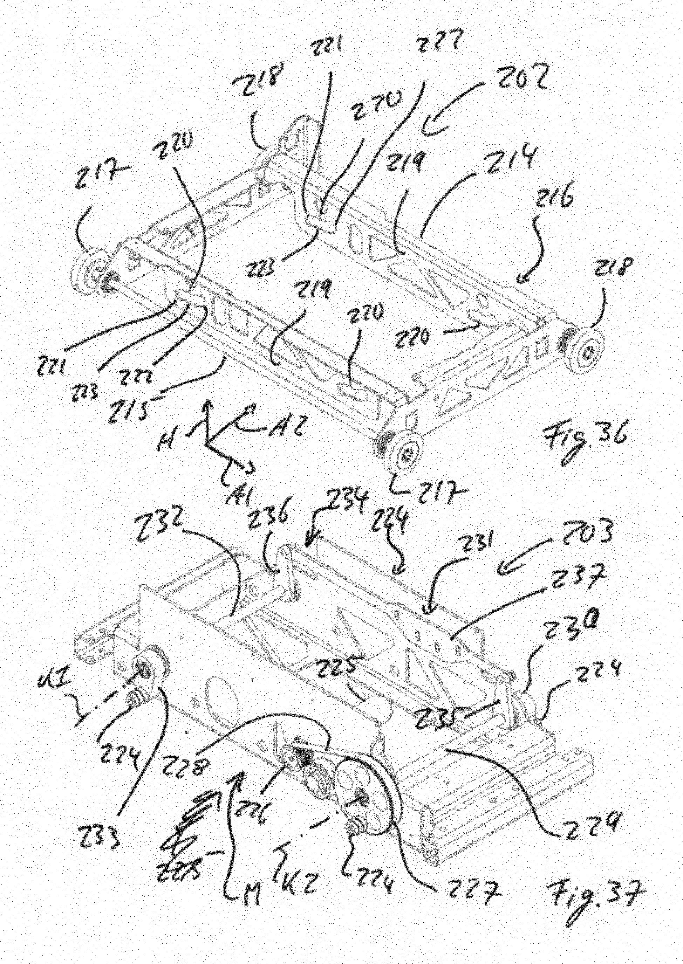

Figure 36 shows the second chassis 202 of the exemplary embodiment of figure 34 in an isolated schematic perspective view.

The second chassis 202 may comprise a base frame 214, in which two axles 215, 216 are mounted. The axles 215, 216 each comprise two wheels 217, 218. The axles 215, 216 extend perpendicular to the second predetermined driving direction A2 and the wheels 217, 218are aligned such that the second chassis 202 can only drive along the second predetermined driving direction A2.

The second chassis 202 and for example its base frame 214 may comprise a frontal sidewall 219 or even a pair of parallel frontal side walls 219 that extends perpendicular to the second predetermined driving direction A2. The frontal sidewall 219 or each of the pair of the frontal side walls 219 may comprise a lifting slot 220.

The lifting slots 220 may comprise two end sections 221, 222 curved in opposite directions with a transition section 223 there between. Each of the frontal side walls 219 may comprise two lifting slots 220, which may be arranged closer to the axles 215, 216 than to each other.

Figure 37 shows the lifting device 203 of the exemplary embodiment of figure 34 in an isolated schematic perspective view.

The lifting device 203 may comprise at least one lifting bolt 224 and for example a plurality and e.g. four lifting bolts 224. The lifting bolts 224 may be mounted to a base frame M of the lifting device 203 rotatable around axes K1, K2. The axes K1, K2 may be arranged outside of the respective lifting bolts 224 such that the lifting bolts 224 can be moved around the respective axis K1, K2.

The lifting device 203 may comprise an electric motor 225 for moving the lifting bolts 224. The electric motor 225 may be coupled with at least one of the lifting bolts 224 via two drive pulleys 226, 227, which are interconnected with a drive belt 228. For example, the drive pulleys 226, 227 may be toothed wheels and the drive belt 228 may be a toothed belt. The drive pulley 226 may be driven directly by the electric motor 225. The drive belt 228 may couple the drive pulley 226 with the drive pully 227 in a motion transmitting manner. The lifting bolt 224 may be attached to an off-center position of the drive pulley 227 and for example closer to an edge of the drive pulley 227 than to a center of the drive pulley 227 in a radial direction of the drive pulley 227. The diameter of the drive pulley 226 may be smaller than the diameter of the drive pulley 227.

The lifting device 203 may comprise a transmission axle 229 through which the axis K2 extends. The transmission axle 229 may be mounted to a center of the drive pulley 227 and may interconnect the drive pulley 227 to a lifting element 230 that comprises another one of the lifting bolts 224. The drive pulley 227 may be mounted on an outer lateral side of the base frame M and the lifting element 230 may be arranged on another outer lateral side of the base frame M that faces away from the drive pulley 227. The transmission axle 229 may extend along the second predetermined driving direction A2. The axes K1, K2 may extend along the second predetermined driving direction A2. The drive pulley 227 and/or the lifting element 230 may rotate around the second predetermined driving direction A2.

The lifting element 230 may be formed as a crank of winder and the crank or winder axle may correspond to the axis K2. A crank or winder arm of the lifting element 230 may interconnect the crank or winder axle with the lifting bolt 224. The length of the crank or winder arm may correspond to a distance of the lifting bolt 224 of the drive pulley 227 to the center of the drive pulley 227, i.e. the axle K2. Thus, the lifting bolts 224 connected to the transmission axle 229 in a motion transmitting manner may have identical distances to the axle K2. In a rotational direction around the axle K2, the lifting bolts 224 connected to the transmission axle 229 in a motion transmitting manner may have identical positions.

The lifting device 203 may comprise a motion transmission device 231 that transmits the movements caused by the electric motor to another transmission axle 232. The other transmission axle 232 may extend at a distance to and parallel to the transmission axle 229. The other transmission axle 232 may interconnect two further lifting elements 233, 234. The two further lifting elements 233, 234 may be identical to the lifting element 230. The other transmission axle 232 and the two further lifting elements 233, 234 may rotate around axis K1. Rotational positions of the two further lifting elements 233, 234 and of their lifting bolts 224 around the axis K1 may correspond to the rotational position of the lifting element 230 and to its lifting bolt 224.

The motion transmission device 231 may comprise a leverage with two connecting levers 235, 236 and with a transmission lever 237. The connecting levers 235, 236 may each be connected to another one of the transmission axles 229, 232 in a motion transmitting manner. The connecting levers 235, 236 may each be fixed to another one of the transmission axles 229, 232. Thus, rotations of the transmission axles 229, 232 will pivot one of the connecting levers 235, 236. The connecting levers 235, 236 may each comprise a free end that faces away from the respective one of the transmission axles 229, 232. The free ends of the connecting levers 235, 236 may be connected to the transmission lever 237. The transmission lever 237 is adapted to transmit push-pull-movements from the connecting lever 235 to the connecting lever 236.

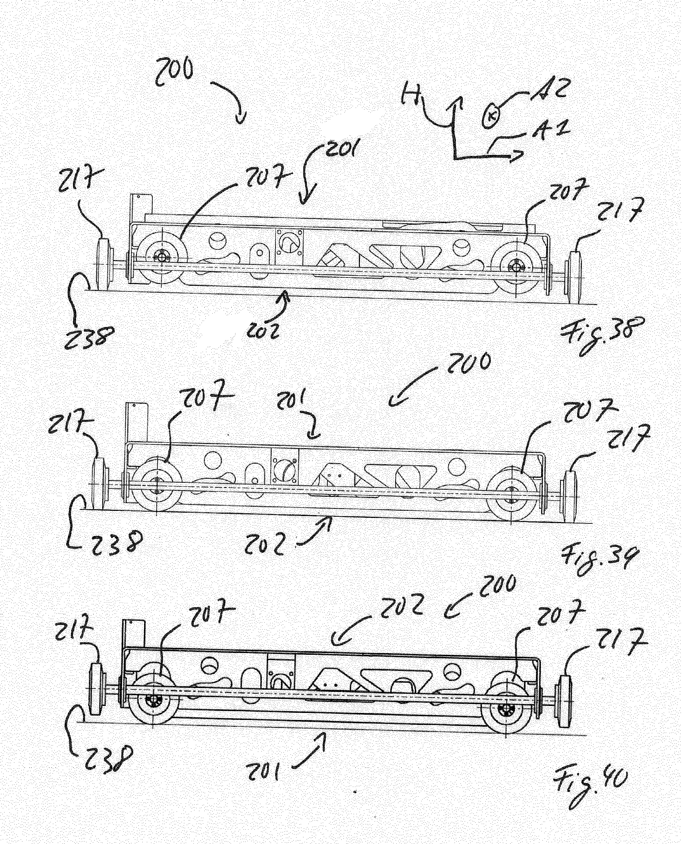

Figure 38 shows the storage container mover 200 in a schematic side view in a second driving state in which the storage container mover 200 can drive in and against the second predetermined drive direction A2, only. In the state shown in figure 38, merely the wheels 217 (and 218, not shown) of the second chassis 202 contact a ground 238. The wheels 207 (and 208, not shown) of the first chassis 201 are arranged at a distance to and e.g. lifted from the ground 238. In this state, the storage container mover 200 can drive in and against the second predetermined drive direction A2, only.

Figure 40 shows the storage container mover 200 in a schematic side view in an intermediate state, in which all wheels 207, 208, 217, 218 of the storage container mover 200 contact the ground 238. For example, the wheels 207 (and 208, not shown) are lowered to the ground.

Figure 40 shows the storage container mover 200 in a schematic side view in a first driving state in which the storage container mover 200 can drive in and against the first predetermined drive direction A1, only. In the state shown in figure 40, merely the wheels 207 (and 208, not shown) of the first chassis 201 contact the ground 238. The wheels 217 (and 218, not shown) of the second chassis 201 are arranged at a distance to and e.g. lifted from the ground 238. In this state, the storage container mover 200 can drive in and against the first predetermined drive direction A1, only.

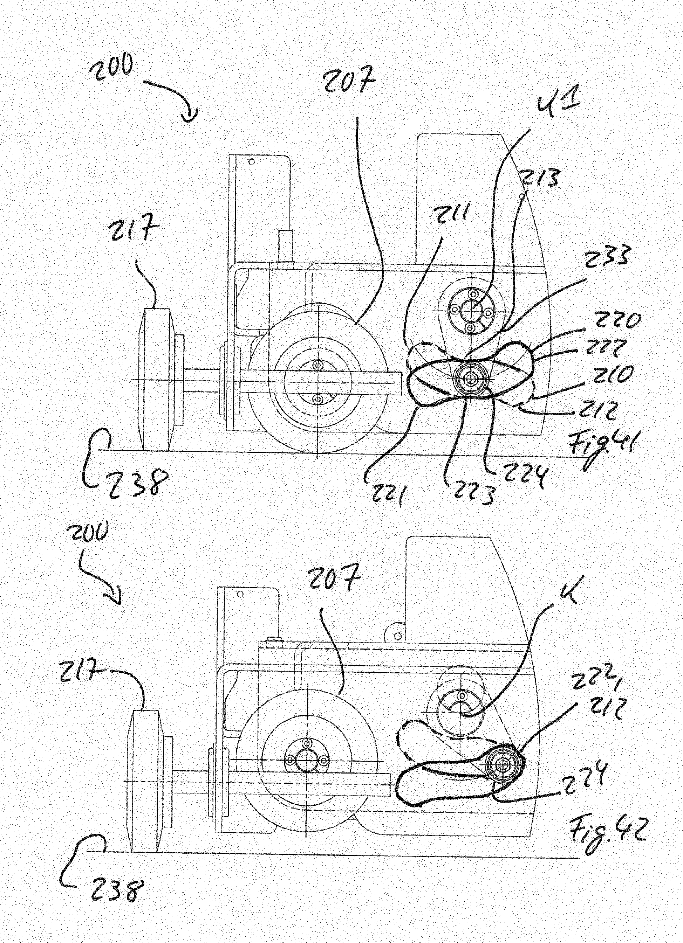

Figure 41 shows the storage container mover 200 in an enlarged schematic side view in the intermediate state of figure 39. All wheels 207, 217 (and 208, 218, not shown) contact the ground 238 such that weight load from a storage container, e.g. the storage container 4, that rests on the storage container mover 200, can be transmitted to the ground 238 via all wheels 207, 217 (and 208, 218, not shown).

Figure 41 depicts merely one of the lifting slots 210, 220 with one of the lifting bolts 224. Yet, all of the lifting slots 210, 220 may interact with the respective one of the lifting bolts 224 in the same manner as described in the following.

In the intermediate state, the lifting bolt 224 may be extend through the transmission sections 213, 223 of both lifting slots 210, 220. Thus, in the intermediate state, the transmission sections 213, 223 of both lifting slots 210, 220 may overlap each other, i.e. a projection of one of the transmission sections 213, 223 along axis K1 may intersect with the respective other one of the transmission sections 213, 223.

In the intermediate state, the lifting slots may be mirror symmetrical with a plane of symmetry, wherein the axes K1, K2 lay in this plane of symmetry.

Figure 42 shows the storage container mover 200 in an enlarged schematic side view in the second driving state of figure 38. Only the wheels 217 (and 218, not shown) contact the ground 238. Weight load of a storage container, e.g. the storage container 4, that rests on the storage container mover 200, can be transmitted to the ground 238 via the wheels 217 (and 218, not shown), only. Hence, lifting the wheels 207 (and 208, not shown) of the first chassis 201 merely required force sufficient to lift the first chassis 201 and not also of the storage container.

In the second driving state, the lifting bolt 224 may be extend through the end sections 212, 222 of both lifting slots 210, 220. Thus, in the second driving state, the lifting bolt 224 has moved the lifting slots 210, 220 and, hence, the first and the second chassis 201, 202 relative to each other such that the end sections 212, 222 of both lifting slots 210, 220 may overlap each other, i.e. a projection of one of the end sections 212, 222 along axis K1 may intersect with the respective other one of the end sections 212, 222.

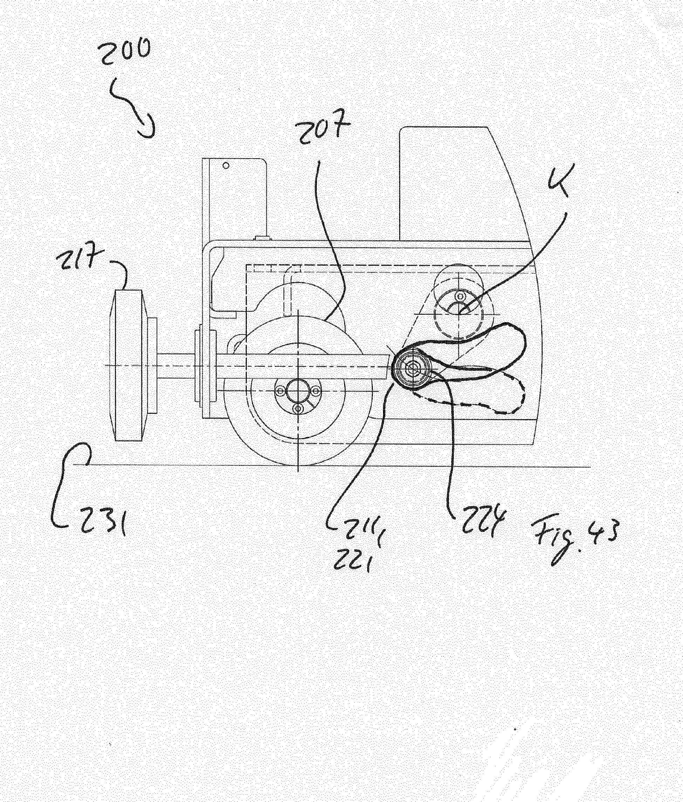

Figure 43 shows the storage container mover 200 in an enlarged schematic side view in the first driving state of figure 40. Only the wheels 207 (and 208, not shown) contact the ground 238. Weight load of a storage container, e.g. the storage container 4, that rests on the storage container mover 200, can be transmitted to the ground 238 via the wheels 207 (and 208, not shown), only. Hence, lifting the wheels 217 (and 218, not shown) of the second chassis 202 merely required force sufficient to lift the second chassis 202 and not also of the storage container.

In the first driving state, the lifting bolt 224 may be extend through the end sections 211, 221 of both lifting slots 210, 220. Thus, in the first driving state, the lifting bolt 224 has moved the lifting slots 210, 220 and, hence, the first and the second chassis 201, 202 relative to each other such that the end sections 211, 221 of both lifting slots 210, 220 may overlap each other, i.e. a projection of one of the end sections 211, 221 along axis K1 may intersect with the respective other one of the end sections 211, 221.

As recognizable from figures 41 to 43, the lifting bolt 224 or lifting bolts 224 may transfer any weight load received from a storage container 4 and optionally goods therein to the respective lower one of the first and second chassis 201, 202. Hence, depending on which of the first and second chassis 201, 202 is contacting the ground 238, this chassis comprises a load receiving element for receiving the weight load from a storage container 4 moved by the storage container mover 200. In particular, the load receiving element may be the respective lifting slot 210, 220 or the respective one of the lateral side walls 209 and the frontal side walls 219. The respective lifting slots 210 or 220 or the respective lateral side walls 209 or the frontal side walls 219 may divert the weight load into the ground 238 via the respective wheels 207 or 217 of the one of the first chassis and the second chassis201, 202.

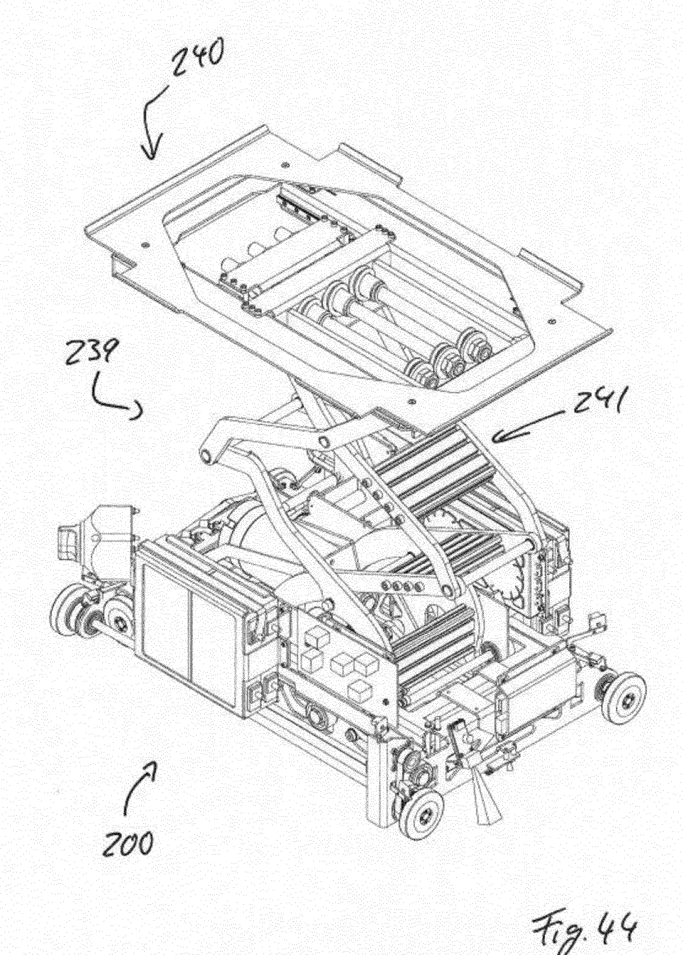

Figure 44 shows another exemplary embodiment of the storage container mover 200 in a schematic perspective view. For elements, which correspond in form and/or function to elements of the embodiment of figures 34 to 43, the same reference numerals are used. In the following, merely the differences with respect to the previous embodiment are described, for the sake of brevity.

The storage container mover of the exemplary embodiment of figure 44 additionally comprises a container lifting device 239. The container lifting device 239 may be adapted to lift and lower storage containers 4, in particular to move the respective storage container 4 up to or remove the respective storage container 4 from one of the storage columns 3.

The container lifting device 239 may comprise a laydown plate 240, on which a storage containers 4 can rest while the storage container mover 200 moves along one of the driving directions A1, A2, and when the container lifting device 239 lifts or lowers the respective storage container 4. For example, the container lifting device 239 may comprise a lever action 241, e.g. a scissors lifting system.

The electric motor 225, at least one driving motor driving the wheels 207 and/or 217, and/or a lifting motor driving the container lifting device 239 and in particular its lever action 241 may be connected to the control device in a control signal transmitting manner, wherein the control device may determine, where the storage container mover 200 moves a storage container 4 and/or there the storage container mover 200 picks-up a storage container 4.

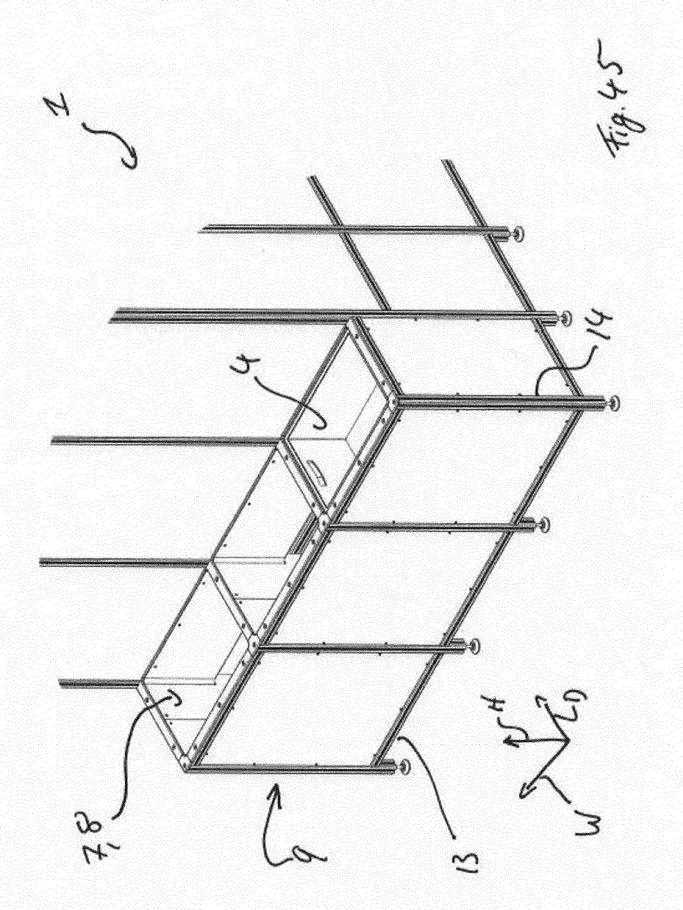

Figure 45 shows another embodiment of the storage device 1 in a schematic perspective view. For elements, which correspond in form and/or function to elements of the embodiment of the storage device 1 of figures 1 to 33, the same reference numerals are used. In the following, merely the differences with respect to the previous embodiment are described, for the sake of brevity.

The storage device 1 of the exemplary embodiment of figure 45 additionally comprises at least one removal opening 7 for presenting storage containers 4, 4A for removal of goods from the storage containers 4, 4A by an operator, the at least one removal opening 7 facing upwards. For example, the removal opening 7 may be placed next to one of the lateral sides of an outermost one of the storage columns 3. The storage device 1 may comprise a plurality of removal openings 7, which may be arranged next to each other or distributed at an outer circumference of the storage device 1. In the exemplary embodiment of figure 45, the storage device 1 comprises a plurality of removal openings, which are arranged one after the other along the horizontal direction W.

The at least one removal opening 7 may be an upper end of a removal column 8 of the storage device 1. The removal opening 7 may communicate with the distribution level 5, via which storage containers 4, 4A can be moved between the at least one storage column 3 and the at least one removal opening 7, e.g. via the removal column 8. The removal column 8 may extend along the vertical direction H and may have a height of e.g. 1 meter, 1.1 meter, 1.2 meter, 1.3 meter or up to 1.4 meter to allow a user to ergonomically access goods placed in a storage container 4.

The at least one removal opening 7 and the at least one removal column 8 may be provided by a removal device 9, which may in essence be made of the same structural elements, i.e. the horizontal and vertical bars 13, 14 as the storage device 1 and/or the feed device 100. The removal device 9 may by provided independent of the storage device 1, e.g. like the feed device 100, or affixed to or an integral part of the storage device 1.

Selected lateral side of the storage device 1 and of the removal device 9 are closed of side panels in figure 45.

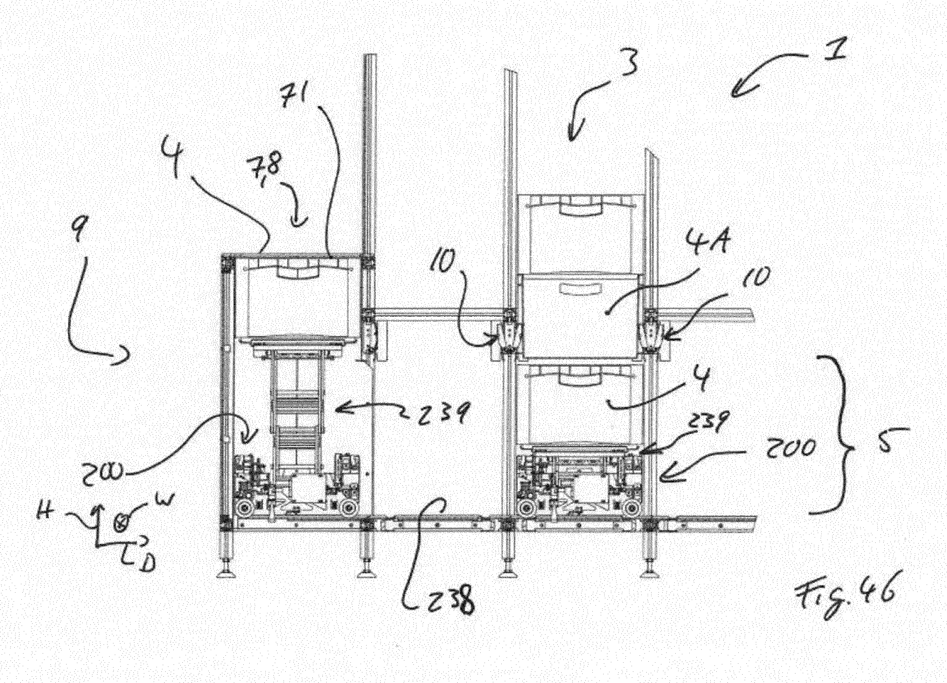

Figure 46 shows the exemplary embodiment of figure 45 in a schematic side view with side panels shown in figure 45 removed.

One of the storage container movers 200 is shown arranged at a lower end of the removal column 8. Its container lifting device 239 is shown in an extended state, in which it lifts a storage container 4 up, i.e. in the vertical direction H. In the extended state, the container lifting device 239 may lift the storage container so far up that its access opening and/or upper edge 71 is flush with the removal opening 7 to avoid obstacles, e.g. the upper edge 71, hindering an operator from removing goods from the storage container 4.

Another one of the storage container movers 200 is shown arranged at a lower end of the storage column 3. Its container lifting device 239 is shown in a retracted state, in which it is retracted against the vertical direction H. The storage container mover 200 carries another one of the storage containers 4. In the retracted state, the height of the storage container movers 200 and of one of the storage containers 4 arranged thereon corresponds or is less than a height of the distribution level 5.

Yet another one of the storage containers 4A is held by the support device 4, e.g four thereof, in the storage column 3. At least one further storage container 4 may rest on the storage containers 4A.

As shown in figure 46, the storage device 1 may provide the ground 238 the storage container movers 200 may drive on. The ground 238 may extend from the storage device 1 to the removal device 9 and/or to the feed device 100 to allow for smooth movements of the storage container movers 200 between the the storage device 1 and the removal device 9 and/or to the feed device 100.

### Reference Signs

- 1: storage device
- 2: combined load and unload opening
- 3: storage column
- 4, 4A: storage container
- 5: distribution level
- 6: feed opening
- 7: removal opening
- 8: removal column
- 9: removal device
- 10: support device
- 11, 12: support arm
- 13: horizontal bar
- 14: vertical bar
- 15: positioning plate
- 16: base body
- 17: actuator element
- 18, 19: base plate
- 20, 21: fixing leg
- 22, 23: mounting leg
- 24, 25,: mounting shaft
- 26 27, 28: curved guide slot
- 29: actuating end
- 30, 31: entrained element
- 32, 33: mounting shaft
- 34: entrainer end
- 35: lower end
- 36: upper end
- 37, 38: inner surface
- 39: opening
- 40: front section
- 41, 42: lateral leg
- 43, 44: frontal faces
- 45, 46: concave section
- 47, 48: straight section
- 49, 50: recessed section
- 51: guide tongue
- 52: free end
- 53: guide face
- 54: contact surface
- 55: base
- 56: support face
- 57: contact element
- 58, 59: mounting plate
- 60, 61: connecting arm
- 62, 63,: mounting opening
- 64, 65, 68 66: upper surface
- 67: lower surface
- 69: center of gravity
- 70: locking surface
- 71: upper edge
- 72: collar / flange
- 73, 73A: consecutive collar / flange
- 74: outer side
- 100: feed device
- 101: counter feed opening
- 102: feed level
- 103: storage column
- 104: position definition device
- 105: guide plate
- 106: front side
- 107: position securing device
- 108: rear side
- 109: securing element
- 110: coupling device
- 111: coupling element

- 200: storage container mover
- 201: first chassis
- 202: second chassis
- 203: lifting device
- 204,: base frame
- 214, M 205,: axle
- 206, 215, 216 207,: wheel
- 208 209: lateral side wall
- 210,: lifting slot
- 220 211,: end section
- 212, 221, 222 213,: transition section
- 223 219: frontal side wall
- 224: lifting bolt
- 225: electric motor
- 226,: drive pully
- 227 228: drive belt
- 229,: transmission axle
- 232 230: lifting element
- 233, 234 231: motion transmission device
- 235,: connecting levers
- 236 237: transmission lever
- 238: ground
- 239: container lifting device
- 240: laydown plate
- 241: lever action

- A1,2: driving direction
- B: rest position
- D, W: horizontal direction
- E: width direction
- F: feed position
- H: vertical direction
- K1, K2: axes
- L: length direction
- P, P1,: pivot axis
- P2, P3 r: radius
- R: passing position
- S: supporting position
- T: height direction
- U: deflected position
- V: protruding direction

## Claims

1. A storage device (1) having at least one combined load and unload opening (2),
**characterized in that**
the at least one combined load and unload opening (2) faces downwards.

2. The storage device (1) of claim 1, **characterized in that** the storage device (1) comprises at least one storage column (3) for storing storage containers (4, 4A) one above the other, wherein the at least one storage column (3) has the combined load and unload opening (2) at its lower end.

3. The storage device (1) of claim 1, **characterized in that** the storage device (1) comprises a plurality of storage columns (3) for storing storage containers (4, 4A) one above the other, and a distribution level (5) below the storage columns (3), wherein at least two of the plurality of storage columns (3) open into the distribution level (5) via the combined load and unload openings (2) of the at least two of the storage columns (3).

4. The storage device (1) of claim 3, **characterized in that** the storage device (1) comprises at least one feed opening (6) for feeding storage containers (4, 4A) to the distribution level (5).

5. The storage device (1) of claim 4, **characterized in that** in the at least one feed opening (6) opens horizontally and/or **in that** the at least one feed opening (6) is level with the distribution level (5).

6. The storage device (1) of claim 3, **characterized in that** the storage columns (3) are arranged next to each other along a first and a second horizontal direction (D, W), the first horizontal direction (D) differing from the second horizontal direction (W).

7. The storage device (1) of any of claims 1 to 6, **characterized in that** the storage device (1) comprises at least one removal opening (7) for presenting storage containers (4, 4A) for removal of goods from the storage containers (4, 4A) by an operator, the at least one removal opening (7) facing upwards.

8. The storage device (1) of claim 7 when depending from any of 3 to 6, **characterized in that** the storage device (1) comprises at least one removal column (8) with one of the at least one removal openings (7) forming the upper end of the at least one removal column (8), wherein a lower end of the at least one removal column (8) borders on the distribution level (5).

9. The storage device (1) of any of claims 1 to 8, **characterized in that** the storage device (1) comprises different predefined temperature zones for storing goods with different storage temperature requirements, the predefined temperature zone for the goods having the lowest required storage temperature being further away from at least one of the lateral sides of the storage device (1) than at least one predefined storage zone for goods having higher required storage temperatures.

10. The storage device (1) of any of claims 1 to 9, **characterized in that** the storage device (1) comprises at least one support device (10) for selectively vertically supporting at least one storage container (4, 4A).

11. A method of loading and unloading storage containers (4, 4A) into and from a storage device (1) of any of claims 1 to 10, wherein storage containers (4, 4A) are moved into a storage position within the storage device (1) and unloaded from the storage position from below via the combined load and unload opening (2).

12. The method of claim 11, **characterized in that** the storage containers (4, 4A) are stored in the at least one storage column (3) arranged one above the other.

13. The method of claim 12, **characterized in that** the storage containers (4, 4A) are distributed to a preselected storage column (3) of the plurality of storage columns (3) via the distribution level (5).

14. The method of claim 13, **characterized in that** the storage containers (4, 4A) are horizontally input into the distribution level (5) via the feed opening (6).

15. The method of claim 13 or 14, **characterized in that** goods arranged in the storage containers (4, 4A) are moved with the respective storage containers (4, 4A) from its storage position in the respective storage column (3) to the at least one removal opening (7) via the distribution level (5).

16. The method of any of claims 11 to 15, **characterized in that** goods with lower storage temperature requirements are stored further away from at least one lateral side of the storage device (1) than goods with higher storage temperature requirements.
